(19) Europäisches Patentamt
European Patent Office
Office européen des brevets

(11) EP 3 385 295 A1

(12) EUROPÄISCHE PATENTANMELDUNG

(43) Veröffentlichungstag:
**10.10.2018 Patentblatt 2018/41**

(21) Anmeldenummer: **17165056.7**

(22) Anmeldetag: **05.04.2017**

(51) Int Cl.:
***C08G 18/50*** (2006.01) ***C08G 18/79*** (2006.01)
***C08G 64/34*** (2006.01) ***C08G 18/24*** (2006.01)
***C08G 18/44*** (2006.01) ***C08G 18/46*** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **FLAMMGESCHÜTZTE PHOSPHORFUNKTIONELLE POLYETHERCARBONATPOLYOLE UND VERFAHREN ZU DEREN HERSTELLUNG**

(57) Die Erfindung betrifft ein Verfahren zur Herstellung eines phosphorfunktionellen Polyethercarbonatpolyols, bei dem ein Polyethercarbonatpolyol mit ungesättigten Gruppen mit einer phosphorfunktionellen Verbindung gemäß Formel (Ia) zur Reaktion gebracht wird,

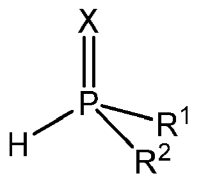

Formel (Ia),

wobei X = O, S; $R^1$ und $R^2$ ausgewählt ist aus der Gruppe umfassend C1-C22 Alkyl, C1-C22 Alkoxy, C1-C22 Alkylsulfanyl C6-C70 Aryl, C6-C70 Aryloxy, C6-C70 Arylsulfanyl, C7-C70 Aralkyl, C7-C70 Aralkyloxy, C7-C70 Aralkylsulfanyl, C7-C70 Alkylaryl, C7-C70 Alkylaryloxy, C7-C70 Alkylarylsulfanyl, oder wobei $R^1$ und $R^2$ direkt und/oder über Heteroatome miteinander verbrückt sind und ausgewählt sind aus der Gruppe umfassend C1-C22 Alkylen, Sauerstoff, Schwefel oder $NR^5$, wobei $R^5$ Wasserstoff, Cl-C22-Alkyl, C1-C22 Acyl, C7-C22 Aralkyl oder C6-C70-Arylrest.

EP 3 385 295 A1

## Beschreibung

Die Erfindung betrifft ein Verfahren zur Herstellung eines phosphorfunktionellen Polyethercarbonatpolyols, bei dem ein Polyethercarbonatpolyol mit ungesättigten Gruppen mit einer phosphorfunktionellen Verbindung zur Reaktion gebracht wird.Des Weiteren betrifft die Erfindung ein phosphorfunktionelles Polyethercarbonatpolyol herstellbar nach dem erfindungsgemäßen Verfahren sowie deren Verwendung unter anderem in der Erzeugung eines phosphorfunktionellen Polyurethan-Polymers.

Moderne Kunststoffe sollen neben einer maßgeschneiderten Funktionalität auch verstärkt ökologischen Gesichtspunkten Rechnung tragen. Dies kann, neben einer allgemeinen Optimierung von Herstellprozessen, auch durch den Einsatz von Treibhausgasen, wie Kohlendioxid, als Synthesebausteine zum Aufbau von Polymeren erreicht werden. So lässt sich zum Beispiel über die Fixierung von Kohlendioxid insgesamt eine bessere Prozess-Umweltbilanz erhalten. Dieser Weg wird im Bereich der Herstellung von Polyethercarbonaten beschritten und bildet seit mehr als 40 Jahren Stand intensiver Forschung (z. B. Inoue et al, Copolymerization of Carbon Dioxide and Alkylenoxide with Organometallic Compounds; Die Makromolekulare Chemie 130, 210-220, 1969). In einer möglichen Herstellungsvariante werden dabei Polyethercarbonate durch eine katalytische Umsetzung von Epoxiden und Kohlendioxid in Anwesenheit H-funktioneller Startersubstanzen ("Starter") erhalten. Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei a, b und c für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist.

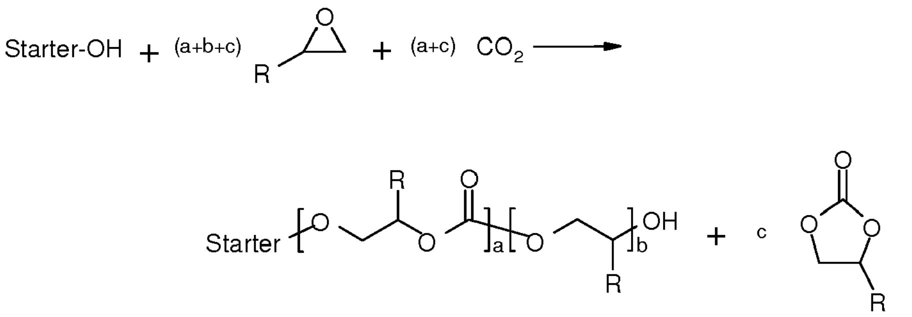

(I)

Als weiteres Produkt, hier ein unerwünschtes Nebenprodukt, entsteht neben dem Polyethercarbonat ein cyclisches Carbonat (beispielsweise für R = $CH_3$ Propylencarbonat).

Prinzipiell ist es dabei möglich, diese Art von Polyethercarbonatpolyolen spezifisch für bestimmte Anwendungsgebiete zu funktionalisieren. Ist zum Beispiel gewünscht, dass das Polymer bestimmte flammhemmende Eigenschaften aufweist, so lässt sich dies über unterschiedliche Wege erreichen. Zum einen kann der Flammschutz dieser Polymere durch Zusatz niedermolekularer oder oligomerer Phosphorverbindungen erfolgen. Auch heterogene Feststoffe, wie (verkapselter) roter Phosphor oder Melaminpolyphosphat können an dieser Stelle zugesetzt werden. Nachteilig hingegen ist, dass diese Flammschutzadditive die mechanischen und anderen physikalischen Eigenschaften von Polymeren verschlechtern können. Diese negativen Effekte sind beispielsweise in US 20130046036 A1 genannt.

Eine weitere Strategie zur Herstellung phosphorhaltiger Polyethercarbonatpolyole ist die Verwendung phosphorhaltiger Monomere im Zuge der Polyethercarbonat-Synthese. Epoxide und cyclische Anhydride stellen hierbei Monomere dar, welche in die Polymerkette von Polyethercarbonaten eingebaut werden können. Die US 2008/0227884 beschreibt zum Beispiel die Herstellung phosphorfunktioneller Epoxide, z.B. durch radikalische Addition von 9,10-Dihydro-9-oxa-10-phosphaphenanthren-10-oxid (DOPO) an Allylglycidylether und die Verwendung des Umsetzungsproduktes als reaktives Flammschutzadditiv in Epoxidharzen. Die Verwendung solcher Comonomere in der Copolymerisation von $CO_2$ und Epoxiden unter Verwendung von Metallsalzen oder -komplexen als Katalysatoren hat allerdings den Nachteil, dass die phosphorfunktionellen Epoxide mit dem Katalysator wechselwirken können und damit die katalytische Aktivität beeinträchtigt wird. Wünschenswert wäre es also, die Phosphorfunktionalität der Polyethercarbonatpolyole erst nach der Polymerisation bereitzustellen.

Die Aufgabe der vorliegenden Erfindung besteht darin, ein verbessertes Verfahren zur Herstellung flammgeschützter Polyethercarbonatpolyole zur Verfügung zu stellen, das keine Nachteile hinsichtlich der Herstellung der Polymere an sich mit sich bringt.

Diese Aufgabe wird erfindungsgemäß gelöst durch ein Verfahren zur Herstellung eines phosphorfunktionellen

Polyethercarbonatpolyols, bei dem ein Polyethercarbonatpolyol mit ungesättigten Gruppen mit einer phosphorfunktionellen Verbindung gemäß Formel (Ia) zur Reaktion gebracht wird,

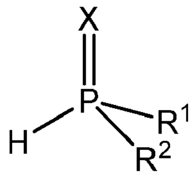

(Ia),

wobei X = O, S bedeutet,
$R^1$ und $R^2$ ausgewählt sind aus der Gruppe umfassend C1-C22 Alkyl, C1-C22 Alkoxy, C1-C22 Alkylsulfanyl C6-C70 Aryl, C6-C70 Aryloxy, C6-C70 Arylsulfanyl, C7-C70 Aralkyl, C7-C70 Aralkyloxy, C7-C70 Aralkylsulfanyl, C7-C70 Alkylaryl, C7-C70 Alkylaryloxy, C7-C70 Alkylarylsulfanyl, oder wobei $R^1$ und $R^2$ direkt und/oder über Heteroatome miteinander verbrückt sind und ausgewählt sind aus der Gruppe umfassend C1-C22 Alkylen, Sauerstoff, Schwefel oder $NR^5$, wobei $R^5$ Wasserstoff, C1-C22-Alkyl, C1-C22 Acyl, C7-C22 Aralkyl oder C6-C70-Arylrest.

Der Erfindung liegt die Erkenntnis zugrunde, dass durch den nachträgliche Funktionalisierung des Polyethercarbonatpolyols mit einer phosphorfunktionellen Verbindung gemäß Formel (Ia) die vorgenannten Nachteile aus dem Stand der Technik überwunden werden können, da durch den festen Einbau in das Polymer keine weichmachende Wirkung durch kurzkettige Flammschutzadditive auftritt und auch keine Deaktivierung des Polymerisationskatalysators auftritt, da zum Zeitpunkt des Einbaus der phosphorfunktionellen Verbindung die Polymerkette des Polyethercarbonatpolyols bereits aufgebaut ist. Es hat sich dabei herausgestellt, dass der Einbau von Doppelbindungen in das Polymerhauptgerüst des Polyethercarbonatpolyols eine vergleichsweise einfache Addition der phosphorfunktionellen Verbindung erlaubt.

Überraschenderweise wurde gefunden, dass dieses Herstellungsverfahren eine effiziente und gesteuerte Funktionalisierung ungesättigter Polyethercarbonatpolyole mit phosphorfunktionellen Verbindungen ermöglicht. Die Phosphorgruppen werden dabei kovalent an das Polymergerüst gebunden. Somit ergeben sich funktionalisierte Polyethercarbonatpolyol mit einer definierten Phosphorfunktionalität. Dies steht im Gegensatz zu Polymeren mit über ionische oder van-der-Waals-Wechselwirkungen schwach gebundenen Phosphorgruppen, deren Gehalt an Phosphorverbindung und deren Eigenschaften sich im Zuge einer Lagerung oder in anschließenden Umsetzungs- oder Aufreinigungsschritten ändern kann. Dies ist durch die kovalente Anbindung der phosphorhaltigen Gruppe an das Polymergerüst gemäß dem erfindungsgemäßen Verfahren ausgeschlossen. Des Weiteren ermöglicht diese Verfahrensführung einen schnellen und gesteuerten Aufbau der eigentlichen Polyethercarbonatpolyole, ohne eine Inaktivierung oder Modifizierung des zum Aufbau der Polyethercarbonatpolyole benötigten Katalysators durch phosphorhaltige Verbindungen befürchten zu müssen.

Des Weiteren kann über die separate Prozessführung auch eine variable Menge an Phosphorverbindungen in ein Polyethercarbonatpolyol mit definierter Funktionalität eingebracht werden. Diese Funktionalität kann in Abhängigkeit der Erfordernisse in der späteren Applikation gewählt werden. Derart lassen sich aus einer Produktionscharge phosphorfunktioneller Polyethercarbonatpolyole unterschiedlich modifizierte Produkte herstellen. Ein weiterer Vorteil kann sich zudem dadurch ergeben, dass nicht alle ungesättigten Gruppen der Polyethercarbonatpolyole modifiziert werden müssen. Dadurch können sich nach der phosphorfunktionellen Modifikation noch weitere funktionelle Gruppen am Polymergerüst befinden, welche innerhalb weiterer Umsetzungsschritte genutzt werden können. Beispielsweise kann diese Funktionalität im Rahmen weiterer Vernetzungsreaktionen genutzt werden. Die erhaltenen phosphorhaltigen Polyethercarbonatpolyole sind zudem ökologisch unbedenklich. Die nach diesem Verfahren erhältlichen phosphorfunktionellen Polyethercarbonatpolyole können im Brandfall eine verstärkte Carbonifizierung einleiten, wodurch eine schützende Oberflächenschicht gebildet wird, welche letztendlich die Menge des brennbaren Materials verringert. Des Weiteren kann es durch zusätzliche Freisetzung von Gasen zur Bildung einer voluminösen Isolationsschicht kommen, welche flammhemmend wirkt. Als weitere Möglichkeit können die phosphorfunktionellen Polyethercarbonatpolyole oder daraus gebildete Zersetzungsprodukte in der Gasphase radikalische Spezies abfangen und somit den Verbrennungsprozess hemmen.

Ausführungsformen und weitere Aspekte der vorliegenden Erfindung werden nachfolgend beschrieben. Sie können beliebig miteinander kombiniert werden, sofern sich aus dem Zusammenhang nicht eindeutig das Gegenteil ergibt.

In einer bevorzugten Ausführungsform des Verfahrens kann die phosphorfunktionelle Verbindung (Ib) umfassen,

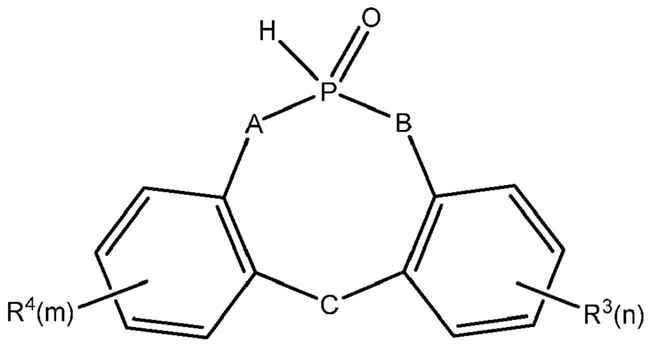

(Ib)

wobei

A, B, und C unabhängig voneinander ausgewählt sind aus der Gruppe umfassend eine chemische Bindung, O, NH, N-(C1-C10 Alkyl), N-(C6-C14 Aryl) und
$R^3$ und $R^4$ unabhängig voneinander ausgewählt sind aus der Gruppe umfassend C1-C10 Alkyl, C1-C10 Alkoxy, C6-C14 Aryl, C6-C14 Aryloxy, C9-C17 Aralkyl und
m, n unabhängig voneinander gleich 0, 1, 2, 3 oder 4 sind.

Diese Verbindungen gemäß Formel (Ib) mit dem aufgeführten Substituentenmuster haben sich als besonders zur Addition an Polyethercarbonatpolyole mit ungesättigten Gruppen geeignet erwiesen.

Die erhältlichen phosphorfunktionellen Polyethercarbonatpolyole zeigen eine ausgesprochen gute flammhemmende Wirkung unter einer nur relativ geringen Änderung der sonstigen Gebrauchseigenschaften des Polymers. Dies kann insbesondere für die Viskosität des phosphorfunktionellen Polyethercarbonatpolyols gelten, welche im Rahmen weiterer Umsetzungsschritte möglichst niedrig gehalten werden sollte. Die Addition dieser Verbindungsklasse mit dem vorgestellten Substituentenmuster an das Polyethercarbonatpolyol mit ungesättigten Gruppen führt zu phosphorfunktionellen Polyethercarbonatpolyolen mit nur einer geringfügig erhöhten Viskosität, welche sich besonders für weitere Vernetzungsschritte eignen.

In einer weiteren Ausgestaltung des Verfahrens können die Substituenten $R^3$ und $R^4$ der Formel (Ib) aus der Gruppe umfassend C1-C8 Alkyl und C1-C8 Alkoxy ausgesucht sein und n, m unabhängig voneinander 0 oder 1 sein. Diese Verbindungen mit dem aufgeführten Substituentenmuster können zu einer deutlichen flammhemmenden Wirkung der phosphorfunktionellen Polyethercarbonatpolyole beitragen, ohne wesentliche Eigenschaften des Grundpolymers zu stark zu verändern. Dies kann insbesondere für weitere Umsetzungen mit vernetzenden Reagenzien gelten. Ohne durch die Theorie gebunden zu sein kann dies wahrscheinlich auf die sterischen Gegebenheiten der relativ kurzkettigen Reste $R_3$ und $R_4$ zurückgeführt werden.

In einem zusätzlichen Aspekt des Verfahrens kann die phosphorfunktionelle Verbindung 9,10-Dihydro-9-oxa-10-phosphaphenanthren-10-oxid (DOPO), Diethylphoshphit, P-Phenylphosphinsäurephenylester (CAS Reg. 52744-21-5) und/oder P-Methyl-Phosphinsäurebutylester (CAS Reg. 6172-80-1) sein. Insbesondere hat sich DOPO im Rahmen der erfindungsgemäßen Verfahrensführung zur Addition an Polyethercarbonatpolyole mit ungesättigten Gruppen als geeignet erwiesen. Diese Reaktion kann äußerst selektiv und Nebenprodukt-arm durchgeführt werden. Die nach dem erfindungsgemäßen Verfahren erhältlichen Produkte zeigen reproduzierbare und gute flammhemmende Wirkung und lassen sich trotz der Phosphorfunktionalisierung noch hinreichend zu weiteren, zum Beispiel höher vernetzten, Polyoxyalkylen-Polymeren umsetzen.

Polyethercarbonatpolyole mit ungesättigte Gruppen im Sinne der Erfindung sind Polyethercarbonatpolyole, deren Molekülstruktur eine oder mehrere C-C-Doppel- oder Dreifachbindungen enhalten. Diese können auch konjugiert sein, wobei aromatische Verbindungen nicht eingeschlossen sind. Es können jedoch aromatische Gruppen zusätzlich zu der ungesättigten Gruppe in der Molekülstruktur enthalten sein.

Polyethercarbonatpolyole mit ungesättigten Gruppen können beispielsweise erhalten werden durch Umsetzung einer Starterverbindung mit einem oder mehreren Alkylenoxiden, Kohlendioxid und einem oder mehrere weitere Monomere ausgewählt aus der Gruppe der Alkylenoxide, der cyclischen Anhydride von Dicarbonsäuren, der Lactone, Lactide, cyclischen 6-Ring Carbonate unter der Maßgabe, das zumindest eine der eingesetzten weiteren Monomere eine oder mehrere C-C-Doppel- oder Dreifachbindungen enthält.

In einer weiteren Ausgestaltung des Verfahren kann das Polyethercarbonatpolyol mit ungesättigten Gruppen einen Anteil an ungesättigten Comonomeren innerhalb des Polyethercarbonatpolyols in Höhe von größer oder gleich 0,1 mol-% und kleiner oder gleich 50 mol-% aufweisen. Bevorzugt beträgt der Anteil an ungesättigten Comonomeren innerhalb des Polyethercarbonatpolyols größer oder gleich 1 mol-% und kleiner oder gleich 40 mol-%, besonders bevorzugt größer oder gleich 5 mol-% und kleiner oder gleich 25 mol-%. Diese Anzahl möglicher Bindungsstellen der phosphorfunktionellen Verbindungen an das Polyethercarbonatpolyol mit ungesättigten Gruppen hat sich als besonders vorteilhaft erwiesen. Zum einen lassen sich phosphorfunktionelle Polyethercarbonatpolyole erhalten, welche einen ausreichen Flammschutz bereitstellen können und zum anderen werden zu starke Änderungen der Polymereigenschaften des Polyoxyalkylen-Polymers vermieden. Dies kann insbesondere für die Viskosität des modifizierten Basispolymers gelten, welche bei einem noch höheren Anteil an ungesättigten Comonomeren zu stark ansteigen könnte. Kleinere Gehalte an ungesättigten Comonomere im Polyoxyalkylen-Polymer können zu einer nur ungenügenden phosphorfunktionellen Funktionalisierung des Polymers führen.

In einer weiteren Ausführungsform des Verfahrens kann das molare Verhältnis an phosphorfunktionellen Verbindungen zu ungesättigten Gruppen des Polyethercarbonatpolyols 10:1 bis 1:1, vorzugsweise 2:1 bis 1:1, ganz besonders bevorzugt 1,25:1 bis 1:1,25 betragen.

Der Phosphorgehalt der gemäß dem erfindungsgemäßen Verfahren erhaltenen phosphorfunktionellen Polyethercarbonatpolyole kann zwischen 0,5 und 15 Gew.-%, bevorzugt zwischen 1 und 10 Gew.-% und besonders bevorzugt zwischen 1 und 4 Gew.-% liegen. Dieser Phosphoranteil kann zu einer hinreichenden flammhemmenden Wirkung der phosphorfunktionellen Polyethercarbonatpolyole und der daraus hergestellten Produkte beitragen.

In einer bevorzugten Ausführungsform der Erfindung umfasst das Verfahren zur Herstellung des Polyethercarbonatpolyols mit ungesättigten Gruppen die Schritte

(α) Vorlegen einer H-funktionellen Starterverbindung und eines DMC-Katalysators,

(β) gegebenenfalls Zudosieren eines Epoxids,

(γ) Zudosieren

(γ1) mindestens eines Epoxids, sowie

(γ2) mindestens eines Epoxids, eines cyclischen Anhydrids einer Dicarbonsäure, eines Lactons, eines Lactids und/oder eines cyclischen 6-Ring Carbonates, das eine Doppelbindung aufweist, und

(γ3) von Kohlendioxid.

Epoxide, cyclische Anhydride einer Dicarbonsäure, eines Lactons, eines Lactids und/oder eines cyclischen 6-Ring Carbonates, die eine ungesättigte Gruppe aufweisen sind beispielsweise Vinylcyclohexenoxid, Cyclooctadienmonoepoxid, Cyclododecatrienmonoepoxid, Butadienmonoepoxid, Isoprenmonoepoxid, Limonenoxid, 1,4-Divinylbenzolmonoepoxid, 1,3-Divinylbenzolmonoepoxid, Glycidylester ungesättigter Fettsäuren (wie Ölsäure, Linolsäure, Konjuenfettsäure oder Linolensäure) und/oder teilweise epoxidierte Fette und Öle (wie teilweise epoxidiertes Sojaöl, Leinöl, Rapsöl, Palmöl oder Sonnenblumenöl), Maleinsäureanhydrid, Norbornendisäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, Itaconsäureanhydrid, Dimethylmaleinsäureanhydrid, Allylnorbornendisäureanhydrid, TMP-Monoallylethercarbonat, Pentaerythritdiallylethercarbonat sowie Epoxide, cyclische Anhydride einer Dicarbonsäure, eines Lactons, eines Lactids und/oder eines cyclischen 6-Ring Carbonates, die mit einer Allylglycidylethergruppe substituiert sind.

Überraschenderweise wurde gefunden, dass diese Art der Herstellung zu Polyethercarbonatpolyolen mit ungesättigten Gruppen führt, welche sich im Rahmen der weiteren phosphorfunktionellen Modifizierung besonders eignen. Insbesondere Polyethercarbonatpolyole mit ungesättigten Seitenketten zeigen eine gute Reaktivität und eine besonders niedrige Viskosität, welche, ohne durch die Theorie gebunden zu sein, durch die Verminderung der intermolekularen Polymer-Polymer Wechselwirkungen, bedingt durch den Einbau der ungesättigten Seitenketten hervorgerufen wird. Insbesondere die Terpolymerisation mit Epoxiden, wobei mindestens eines der Epoxide eine Doppelbindung trägt und/oder Epoxiden mit cyclischen Anhydriden, zeigt diesen Effekt und ist, im Vergleich zu einer "einfachen" Polymerisation mit nur einer Monomerspezies mit ungesättigten Gruppen, deutlich vorteilhafter.

Bevorzugt werden vor der Umsetzung der ungesättigten Gruppen mit phosphorfunktionellen Verbindungen die terminalen OH-Gruppen der Polyethercarbonatpolyole zu einer chemischen Gruppe umgesetzt, die nicht mit phosphorfunktionellen Gruppen reagiert. Die dazu gebräuchlichen Methoden sind dem Fachmann bekannt. Beispielsweise kann dies durch Umsetzung der OH-Gruppen mit Trialkylsiloxanen unter Abspaltung von Alkohol erfolgen. Geeignete Trialkylsiloxane sind beispielsweise Trimethylsiloxan, Triethylsiloxan. Eine alternative Methode ist die Umsetzung der OH-Gruppen mit Alkylierungsreagenzien, wie beispielsweise Trimethyloxonium-Salzen, Methylsulfonat und Methylsulfat. Dies kann weitere Umsetzungsmöglichkeiten an den OH-Gruppen der Polyethercarbonatpolyole nach Entfernung der Schutzgruppe ermöglichen.

Eine bevorzugte Ausführungsform des Verfahrens beinhaltet die Verwendung von Polyethercarbonatpolyolen

mit elektronenreichen Doppelbindungen, womit Doppelbindungen bezeichnet werden, die durch +M oder +I Substituenten, wie Alkyl- oder Alkoxyalkyl- oder Cyclohexylgruppen, substituiert sind. Allgemein sind elektronenreiche Doppelbindungen im Sinne der Erfindung solche, die elektronenreicher als Ethylen sind. Besonders bevorzugt sind Allylether oder Vinylcyclohexene.

Die Einführung dieser Doppelbindungen in das Grundgerüst der Polyethercarbonatpolyole kann durch die Verwendung eines oder mehrerer Doppelbindungen aufweisender Epoxide als Comonomer erfolgen. Beispiele für geeignete Epoxide sind Allylglycidylether, Vinylcyclohexenoxid, Butadienmonoepoxid, Isoprenmonoepoxid oder Limonenoxid, wobei Allylglycidylether bevorzugt ist.

Die Einführung elektronenreicher Doppelbindungen in das Polyethercarbonatpolyol-Polymer kann auch durch Verwendung eines oder mehrerer cyclischer Anhydride von Dicarbonsäuren, die elektronenreiche Doppelbindungen enthalten, als Comonomer erfolgen. Beispiele für geeignete cyclische Anhydride sind 4-Cyclohexen-1,2-dicarbonsäureanhydrid, 4-Methyl-4-cyclohexen-1,2-dicarbonsäureanhydrid, Norbornendisäure-anhydrid, Allylnorbornendisäureanhydrid, Dodecenylbernsteinsäure-anhydrid, Tetradecenyl-bernsteinsäureanhydrid, Hexadecenylbernsteinsäureanhydrid oder Octadecenylbernstein-säureanhydrid, wobei bei den Alkenylbernsteinsäureanhydriden die Doppelbindung keine exo-Doppelbindung am Ring ist.

Eine alternative Ausführungsform beinhaltet die Verwendung von Polyethercarbonatpolyolen mit elektronenarmen Doppelbindungen, womit Doppelbindungen bezeichnet werden, die durch -M oder -I Substituenten, wie Carbonylgruppen, substituiert sind. Die Einführung solcher Doppelbindungen in das Polyethercarbonatpolyol-Polymer kann vorzugsweise durch Verwendung von Glycidylestern $\alpha,\beta$-ungesättigter Säuren, wie Acrylsäure oder Methacrylsäure, als Comonomer erfolgen. In einer bevorzugten Ausführungsform können die Doppelbindungen auch durch die Verwendung cyclischer Anhydride, die Doppelbindungen in Nachbarschaft zu einer Carbonylgruppe tragen, als Comonomer eingeführt werden.

Es können auch Polyethercarbonatpolyole phosphorfunktionalisiert werden, die gleichzeitig elektronenreiche und -arme Doppelbindungen tragen. Auch Gemische von Polyethercarbonatpolyolen mit verschiedenen ungesättigten Bausteinen können für die Phosphorfunktionalisierung eingesetzt werden. Jedoch sind Polyethercarbonatpolyole oder Gemische von Polyethercarbonatpolyolen bevorzugt, in denen der molare Gehalt an elektronenreichen Doppelbindungen größer oder gleich dem Gehalt an elektronenarmen Doppelbindungen ist. Ganz besonders bevorzugt werden Polyethercarbonatpolyole, die nur elektronenreiche Doppelbindungen enthalten, eingesetzt.

Speziell für die Einführung phosphorfunktioneller Gruppen sind Doppelbindungen bevorzugt, die eine freie $=CH_2$ Gruppe aufweisen. Diese sogenannten $\alpha$-Olefine zeigen in der Regel eine nur geringe sterische Hinderung an der Doppelbindung und lassen sich relativ leicht umsetzen. Allylglycidylether oder Vinylcyclohexenoxid sind beispielhaft als Comonomere verwendbare Epoxide, die solche Doppelbindungen in die Polyethercarbonatpolyolkette einführen.

Ferner können als Monomere zur Synthese des Polyethercarbonatpolyols mit ungesättigten Gruppen Alkylenoxide (Epoxide) mit 2-45 Kohlenstoffatomen eingesetzt werden, die keine Doppelbindung tragen. Bei den Alkylenoxiden mit 2 - 45 Kohlenstoffatomen handelt es sich beispielsweise um eine oder mehrere Verbindungen ausgewählt aus der Gruppe umfassend Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, Epoxide von C6-C22 $\alpha$-Olefinen, wie 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester epoxidierter Fettsäuren, Epichlorhydrin, Glycidol, und Derivate des Glycidols wie beispielsweise Glycidylether von C1-C22 Alkanolen, Glycidylester von C1-C22 Alkancarbonsäuren. Beispiele für Derivate des Glycidols sind Phenylglycidylether, Kresylglycidylether, Methylglycidylether, Ethylglycidylether und 2-Ethylhexylglycidylether. Vorzugsweise können als Alkylenoxide Ethylenoxid und/oder Propylenoxid, insbesondere Propylenoxid eingesetzt werden.

Polyethercarbonatpolyole mit ungesättigten Gruppen sind beispielhaft in Formel (II) wiedergegeben, wobei das hier im Formel (II) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Formel (II) gezeigte Polyethercarbonatpolyol beschränkt ist, und

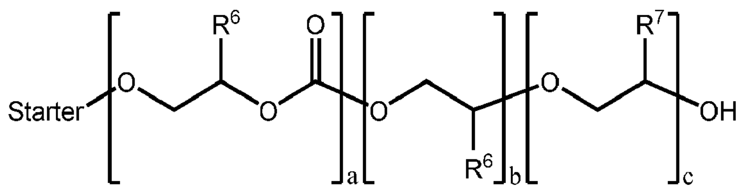

(II),

wobei $R^6$ C1-C43 Alkyl, C7-C70 Alkylaryl oder C6-C70 Aryl bedeutet, wobei jeweils auch Heteroatome wie O, S, Si enthalten sein können, und

wobei $R^7$ C1-C43 Alkenyl, oder C7-C70 Alkenylaryl bedeutet, wobei jeweils auch Heteroatome wie O, S, Si enthalten sein können, und

wobei a und b für eine ganze Zahl stehen und das Verhältnis von a/b 2 : 1 bis 1 : 20, insbesondere 1,5 : 1 bis 1 : 10, beträgt und

wobei c für null oder eine ganze Zahl stehen und der Anteil an ungesättigten Comonomeren innerhalb des Polyethercarbonatpolyols (c) bezogen auf die enthaltenen chemischen Gruppen ohne Starter (Summe a + b + c) einen Wert von größer oder gleich 0,1 : 100 und kleiner oder gleich 50 : 100 aufweist. Bevorzugt beträgt der Anteil an ungesättigten Gruppen innerhalb des Polyetherestercarbonatpolyol größer oder gleich 1 : 100 und kleiner oder gleich 40 : 100, besonders bevorzugt größer oder gleich 5 : 100 und kleiner oder gleich 25 : 100.

Polyetherestercarbonatpolyole mit ungesättigten Gruppen sind beispielhaft in Formel (IIa) wiedergegeben, wobei das hier im Formel (IIa) gezeigte Produkt für das Polyetherestercarbonatpolyol lediglich so verstanden werden soll, dass sich Blöcke mit der gezeigten Struktur im erhaltenen Polyetherestercarbonatpolyol prinzipiell wiederfinden können, die Reihenfolge, Anzahl und Länge der Blöcke sowie die OH-Funktionalität des Starters aber variieren kann und nicht auf das in Formel (III) gezeigte Polyetherestercarbonatpolyol beschränkt ist, und

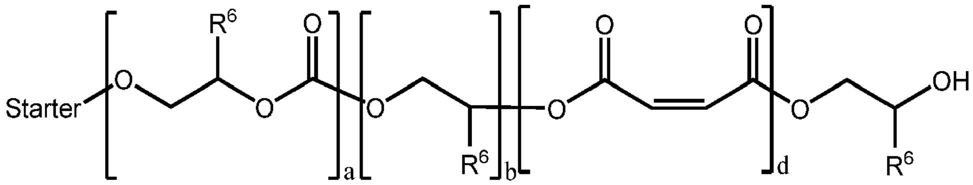

(IIa),

wobei $R^6$ C1-C43 Alkyl, C7-C70 Alkylaryl oder C6-C70 Aryl bedeutet, wobei jeweils auch Heteroatome wie O, S, Si enthalten sein können, und

wobei a und b für eine ganze Zahl stehen und das Verhältnis von a/b 2 : 1 bis 1 : 20, insbesondere 1,5 : 1 bis 1 : 10, beträgt und

wobei d für eine ganze Zahl steht und der Anteil an ungesättigten Comonomeren innerhalb des Polyetherestercarbonatpolyol (d) bezogen auf die enthaltenen chemischen Gruppen ohne Starter (Summe a + b + d) einen Wert von größer oder gleich 0,1 : 100 und kleiner oder gleich 50 : 100 aufweist. Bevorzugt beträgt der Anteil an ungesättigten Gruppen innerhalb des Polyethercarbonatpolyols größer oder gleich 1 : 100 und kleiner oder gleich 40 : 100, besonders bevorzugt größer oder gleich 5 : 100 und kleiner oder gleich 25 : 100.

Eine bevorzugte Ausführungsform für das erfindungsgemäß einsetzbare Verfahren zur Herstellung von Polyethercarbonatpolyolen mit ungesättigten Gruppen beinhaltet die Umsetzung einer oder mehrerer H-funktioneller Starterverbindungen, einem oder mehrerer Alkylenoxide, einem oder mehrerer Comonomere und Kohlendioxid in Gegenwart eines DMC-Katalysators, wobei

(α) eine H-funktionelle Startersubstanz oder ein Gemisch aus mindestens zwei H-funktionellen Startersubstanzen vorgelegt und gegebenenfalls Wasser und/oder andere leicht flüchtige Verbindungen durch erhöhte Temperatur und/oder reduziertem Druck entfernt werden ("erste Aktivierungsstufe"), wobei der DMC-Katalysator der H-funktionellen Startersubstanz oder dem Gemisch von mindestens zwei H-funktionellen Startersubstanzen vor oder nach der 1. Aktivierungsstufe zugesetzt wird,

(β) eine Teilmenge (bezogen auf die Gesamtmenge der in den Schritten (β) und (γ) eingesetzten Menge an Epoxiden/cyclischen Anhydriden) von einem oder mehreren Epoxiden zu der aus Schritt (α) resultierenden Mischung zugesetzt wird ("zweite Aktivierungsstufe"), wobei gegebenenfalls die Zugabe einer Teilmenge an Epoxid in Gegenwart von $CO_2$ und/oder Inertgas (wie beispielsweise Stickstoff oder Argon) erfolgen kann, und wobei eine Mehrfachdosierung ebenfalls möglich ist (d.h. der Schitt (β) kann mehrfach, vorzugsweise ein bis dreimal wiederholt werden, und

(γ) ein oder mehrere Epoxide/ cyclische Anhydride, ein oder mehrere Comonomere und Kohlendioxid zu der aus Schritt (β) resultierenden Mischung fortwährend zudosiert werden, wobei die für die Terpolymerisation eingesetzten Epoxide/cyclischen Anhydride gleich oder von den bei Schritt (β) eingesetzten Epoxiden verschieden sind ("Polymerisationsstufe").

Zu Schritt (α):

Die Zugabe der einzelnen Komponenten in Schritt (α) kann gleichzeitig oder nacheinander in beliebiger Reihenfolge erfolgen, bevorzugt wird in Schritt (α) zunächst der DMC-Katalysator vorgelegt und gleichzeitig oder anschließend die H-funktionelle Starterverbindung zugesetzt.

Gegenstand einer bevorzugten Ausführungsform ist ein Verfahren, wobei in Schritt (α)

(α1) in einem Reaktor der DMC-Katalysator und eine oder mehrere H-funktionelle Starterverbindungen vorgelegt werden,

(α2) [erste Aktivierungsstufe] durch den Reaktor bei einer Temperatur von 50 bis 200°C, bevorzugt von 80 bis 160°C, besonders bevorzugt von 125 bis 135°C ein Inertgas (beispielsweise Stickstoff oder ein Edelgas wie Argon), ein Inertgas-Kohlendioxid-Gemisch oder Kohlendioxid geleitet wird und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird.

Gegenstand einer weiteren bevorzugten Ausführungsform ist ein Verfahren, wobei in Schritt (α)

(α1) die H-funktionelle Starterverbindung oder ein Gemisch aus mindestens zwei H-funktionellen Starterverbindungen, gegebenenfalls unter Inertgasatmosphäre, unter einer Atmosphäre aus Inertgas-Kohlendioxid-Gemisch oder unter einer reinen Kohlendioxid-Atmosphäre, besonders bevorzugt unter Inertgasatmosphäre, vorgelegt wird und

(α2) [erste Aktivierungsstufe] in das resultierende Gemisch aus DMC-Katalysator und einer oder mehrerer H-funktioneller Starterverbindungen bei einer Temperatur von 50 bis 200°C, bevorzugt von 80 bis 160°C, besonders bevorzugt von 125 bis 135°C ein Inertgas, ein Inertgas-Kohlendioxid-Gemisch oder Kohlendioxid, besonders bevorzugt ein Inertgas eingeleitet und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird, wobei der Doppelmetallcyanid-Katalysator zu der H-funktionellen Startersubstanz oder dem Gemisch aus mindestens zwei H-funktionellen Startersubstanzen in Schritt (α1) oder unmittelbar anschließend in Schritt (α2) zugesetzt werden kann.

Der DMC-Katalysator kann in fester Form oder in einer H-funktionellen Starterverbindung suspendiert zugegeben werden. Wird der DMC-Katalysator als Suspension zugegeben, wird diese bevorzugt in Schritt (α1) der einen oder mehreren H-funktionellen Starterverbindungen zugefügt.

Zu Schritt (β):

Der Schritt (β) der zweiten Aktivierungsstufe kann in Gegenwart von $CO_2$ und/oder einem Inertgas erfolgen. Bevorzugt erfolgt Schritt (β) unter einer Atmosphäre aus einem Inertgas-Kohlendioxid-Gemisch (beispielsweise Stickstoff-Kohlendioxid oder Argon-Kohlendioxid) oder einer Kohlendioxid-Atmosphäre, besonders bevorzugt unter Kohlendioxid-Atmosphäre. Das Einstellen einer Inertgas-Kohlendioxid-Atmosphäre oder einer Kohlendioxid-Atmosphäre und die Dosierung eines oder mehrerer Alkylenoxide können prinzipiell in unterschiedlicher Weise erfolgen. Der Vordruck wird bevorzugt durch Einleiten von Kohlendioxid eingestellt, wobei der Druck (absolut) 10 mbar bis 100 bar, vorzugsweise 100 mbar bis 50 bar und besonders bevorzugt 500 mbar bis 50 bar beträgt. Der Start der Dosierung des oder der Epoxide/cyclischen Anhydride kann bei einem beliebig zuvor gewählten Vordruck erfolgen. Als Gesamtdruck (absolut) der Atmosphäre wird in Schritt (β) vorzugsweise ein Bereich von 10 mbar bis 100 bar, vorzugsweise 100 mbar bis 50 bar und weiterhin bevorzugt 500 mbar bis 50 bar eingestellt. Gegebenenfalls kann während oder nach der Dosierung der Epoxide/cyclischen Anhydride der Druck durch Einleiten von weiteren Kohlendioxids nachgeregelt werden, wobei der Druck (absolut) 10 mbar bis 100 bar, vorzugsweise 100 mbar bis 50 bar und bevorzugt 500 mbar bis 50 bar beträgt.

In einer bevorzugten Ausführungsform kann die bei der Aktivierung in Schritt (β) eingesetzte Menge an einem oder mehreren Epoxiden/cyclischen Anhydriden 0,1 bis 25,0 Gew.%, bevorzugt 1,0 bis 20,0 Gew.%, besonders bevorzugt 2,0 bis 16,0 Gew.%, bezogen auf die im Schritt (α) eingesetzte Menge an H-funktioneller Starterverbindung betragen. Die Epoxide/cyclische Anhydride können in einem Schritt oder schrittweise in mehreren Teilmengen zugegeben werden.

In einer bevorzugten Ausführungsform zur Herstellung des Polyethercarbonatpolyole mit ungesättigten Gruppen kann bei der Aktivierung in Schritt (β) eine Teilmenge (bezogen auf die Gesamtmenge der in den Schritten (β) und (γ) eingesetzten Menge an Epoxiden/cyclischen Anhydriden) von einem oder mehreren Epoxiden/cyclischen Anhydriden zu der aus Schritt (α) resultierenden Mischung zugesetzt [zweite Aktivierungsstufe] werden. Die Zugabe einer Teilmenge an Epoxid/cyclischen Anhydrid kann gegebenenfalls in Gegenwart von $CO_2$ und/oder Inertgas erfolgen. Der Schritt (β)

kann auch mehrfach erfolgen. Der DMC-Katalysator wird vorzugsweise in einer Menge eingesetzt, so dass der Gehalt an DMC-Katalysator im resultierenden Polyethercarbonatpolyol 10 bis 10000 ppm, besonders bevorzugt 20 bis 5000 ppm und höchst bevorzugt 50 bis 500 ppm beträgt.

Beim zweiten Aktivierungsschritt kann das Epoxid/cyclische Anhydrid beispielsweise in einer Portion oder innerhalb von 1 bis 15 Minuten, vorzugsweise 5 bis 10 Minuten zugegeben werden. Die Dauer des zweiten Aktivierungsschritts beträgt bevorzugt 15 bis 240 Minuten, besonders bevorzugt 20 bis 60 Minuten.

Zu Schritt (γ):

Die Dosierung von Epoxid, von cyclischem Anhydrid und Kohlendioxid kann simultan, wechselweise oder sequentiell erfolgen. Es ist auch möglich, dass die Dosierung der gesamten Kohlendioxidmenge auf einmal erfolgt und dass nur das Epoxid sowie das cyclische Anhydrid simultan, wechselweise oder sequentiell dosiert wird. In einer weiteren Ausführungsform der Erfindung wird während der Zugabe der Epoxide/cyclischen Anhydride der $CO_2$-Druck allmählich oder schrittweise gesteigert oder gesenkt oder konstant gehalten. Vorzugsweise wird der Gesamtdruck während der Reaktion durch eine Nachdosierung an Kohlendioxid konstant gehalten. Die Dosierung des oder der Epoxide/cyclischen Anhydride und des $CO_2$ kann simultan, wechselweise oder sequentiell zur Kohlendioxid Dosierung erfolgen. Es ist möglich, das Epoxid mit einer konstanten Dosierrate zu dosieren oder die Dosierrate kontinuierlich oder schrittweise zu steigern oder zu senken oder das Epoxid portionsweise zuzugeben. Bevorzugt wird das Epoxid und/oder cyclische Anhydrid mit konstanter Dosierrate dem Reaktionsgemisch zugegeben. Werden mehrere Epoxide und/oder cyclischen Anhydride innerhalb einer Stufe zur Synthese der Polyethercarbonatpolyole eingesetzt, so können die Epoxide und/oder cyclische Anhydride einzeln oder als Gemisch zudosiert werden. Die Dosierung der Epoxide und/oder cyclischen Anhydride kann simultan, wechselweise oder sequentiell über jeweils separate Dosierungen (Zugaben) erfolgen oder über eine oder mehrere Dosierungen, wobei die Alkylenoxide einzeln oder als Gemisch dosiert werden können. Über die Art und/oder Reihenfolge der Dosierung der Epoxide, der cyclischen Anhydride und/oder des Kohlendioxids ist es möglich, statistische, alternierende, blockartige oder gradientenartige Polyethercarbonatpolyole zu synthetisieren.

Schritt (γ) kann beispielsweise bei Temperaturen von 60 bis 150°C, vorzugsweise von 80 bis 120°C, ganz besonders bevorzugt von 90 bis 110°C durchgeführt werden. Werden Temperaturen unterhalb von 60°C eingestellt, kommt die Reaktion zum Erliegen. Bei Temperaturen oberhalb von 150°C steigt die Menge an unerwünschten Nebenprodukten stark an.

Vorzugsweise wird ein Überschuss an Kohlendioxid bezogen auf die berechnete Menge an benötigtem Kohlendioxid im Polyethercarbonatpolyol eingesetzt, da bedingt durch die Reaktionsträgheit des Kohlendioxids ein Kohlendioxid-Überschuss von Vorteil ist. Die Menge an Kohlendioxid kann über den Gesamtdruck festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatpolyole als vorteilhaft erwiesen. Es ist möglich, das Kohlendioxid dem Reaktionsbehälter kontinuierlich oder diskontinuierlich zuzuführen. Dies hängt davon ab, wie schnell die Epoxide und das $CO_2$ verbraucht werden und ob das Produkt gegebenenfalls $CO_2$-freie Polyether-Blöcke oder Blöcke mit unterschiedlichem $CO_2$-Gehalt enthalten soll. Die Konzentration des Kohlendioxids kann bei der Zugabe der Epoxide/cyclischen Anhydride ebenso variieren. Je nach gewählten Reaktionsbedingungen ist es möglich, das $CO_2$ im gasförmigen, flüssigen oder überkritischen Zustand in den Reaktor einzuleiten. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

In Schritt (γ) kann das Kohlendioxid beispielsweise in die Mischung eingeleitet werden durch

(i) Begasung des Reaktionsgemisches im Reaktor von unten,
(ii) Verwendung eines Hohlwellenrührers,
(iii) eine Kombination aus den Dosierungen gemäß (i) und (ii), und/oder
(iv) Begasung über die Flüssigkeitsoberfläche durch Einsatz mehrstufiger ausgeführter Rührorgane.

Die Begasung des Reaktionsgemisches im Reaktor gemäß (i) erfolgt bevorzugt über einen Begasungsring, eine Begasungsdüse oder über ein Gaseinleitungsrohr. Bei dem Begasungsring handelt es sich vorzugsweise um eine ringförmige Anordnung oder um zwei oder mehrere ringförmige Anordnungen von Begasungsdüsen, die bevorzugt am Boden des Reaktors und/oder an der Seitenwand des Reaktors angeordnet sind.

Der Hohlwellenrührer gemäß (ii) ist bevorzugt ein Rührer, bei dem das Gas über eine hohle Welle des Rührers in die Reaktionsmischung eingeleitet wird. Durch die Drehung des Rührers in der Reaktionsmischung (d.h. beim Mischen) entsteht an dem mit der Hohlwelle verbundenen Ende des Rührflügels ein Unterdruck derart, dass die Gasphase (enthaltend $CO_2$ und ggf. unverbrauchtes Alkylenoxid) aus dem über der Reaktionsmischung befindlichen Gasraum abgesaugt wird und über die Hohlwelle des Rührers in die Reaktionsmischung geleitet wird.

Die Begasung des Reaktionsgemisches gemäß (i), (ii), (iii) oder (iv) kann jeweils mit frisch zudosiertem Kohlendioxid erfolgen und/oder mit einer Absaugung des Gases aus dem Gasraum über der Reaktionsmischung und anschließender Rekompression des Gases kombiniert werden. Beispielsweise wird das aus dem Gasraum über der Reaktionsmischung abgesaugte und komprimierte Gas, gegebenenfalls gemischt mit frischem Kohlendioxid und/oder Epoxiden/cyclischen Anhydriden, wieder in das Reaktionsgemisches gemäß (i), (ii), (iii) und/oder (iv) eingeleitet.

Bevorzugt wird der Druckabfall, welcher über Einbau des Kohlendioxids und der Epoxide bei der Terpolymerisation in das Reaktionsprodukt entsteht, über frisch zudosiertes Kohlendioxid ausgeglichen.

Die Einleitung der Epoxide/cyclischen Anhydride kann separat oder zusammen mit dem $CO_2$ sowohl über die Flüssigkeitsoberfläche oder direkt in die flüssige Phase erfolgen. Bevorzugt erfolgt die Einleitung der Epoxide/cyclischen Anhydride direkt in die flüssige Phase, da dies den Vorteil hat, dass eine rasche Durchmischung der eingebrachten Verbindungen mit der flüssigen Phase erfolgt und so lokale Konzentrationsspitzen vermieden werden können. Die Einleitung in die flüssige Phase kann über ein oder mehrere Einleitungsrohre, eine oder mehrere Düsen oder eine oder mehrere ringförmige Anordnungen von Mehrfach-Dosierstellen erfolgen, die bevorzugt am Boden des Reaktors und/oder an der Seitenwand des Reaktors angeordnet sind.

Die drei Schritte (α), (β) und (γ) können in demselben Reaktor oder jeweils separat in unterschiedlichen Reaktoren durchgeführt werden. Besonders bevorzugte Reaktortypen sind Rührkessel, Rohrreaktor, und Schlaufenreaktor. Werden die Reaktionsschritte (α), (β) und (γ) in unterschiedlichen Reaktoren durchgeführt, kann für jeden Schritt ein unterschiedlicher Reaktortyp verwenden werden.

Polyethercarbonatpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, sollte besonders auf die Dosiergeschwindigkeit der Epoxide geachtet werden. Sie sollte so eingestellt werden, dass trotz der inhibierenden Wirkung des Kohlendioxids die Epoxide/cyclischen Anhydride genügend schnell abreagieren können. Die Konzentration an freien Epoxiden/cyclischen Anhydriden in der Reaktionsmischung während der zweiten Aktivierungsstufe (Schritt β) beträgt vorzugsweise > 0 bis 100 Gew.%, besonders bevorzugt > 0 bis 50 Gew.%, höchst bevorzugt > 0 bis 20 Gew.% (jeweils bezogen auf das Gewicht der Reaktionsmischung). Die Konzentration an freien Epoxiden/cyclischen Anhydriden in der Reaktionsmischung während der Reaktion (Schritt γ) beträgt vorzugsweise > 0 bis 40 Gew.%, besonders bevorzugt > 0 bis 25 Gew.%, höchst bevorzugt > 0 bis 15 Gew.% (jeweils bezogen auf das Gewicht der Reaktionsmischung).

Eine weitere Ausführungsform im Rührkessel für die Copolymerisation (Schritt γ) ist dadurch gekennzeichnet, dass auch eine oder mehrere H-funktionelle Starterverbindungen während der Reaktion kontinuierlich in den Reaktor zudosiert werden. Bei einer Durchführung des Verfahrens im semi-batch Betrieb beträgt die Menge der H-funktionellen Starterverbindungen, die während der Reaktion kontinuierlich in den Reaktor zudosiert werden, bevorzugt mindestens 20 mol% Äquivalente, besonders bevorzugt 70 bis 95 mol% Äquivalente (jeweils bezogen auf die gesamte Menge an H-funktionellen Starterverbindungen). Bei einer kontinuierlichen Durchführung des Verfahrens beträgt die Menge der H-funktionellen Starterverbindungen, die während der Reaktion kontinuierlich in den Reaktor zudosiert werden, bevorzugt mindestens 80 mol% Äquivalente, besonders bevorzugt 95 bis 99,99 mol% Äquivalente (jeweils bezogen auf die gesamte Menge an H-funktionellen Starterverbindungen).

In einer bevorzugten Ausführungsform wird die gemäß der Schritte (α) und (β) aktivierte Katalysator-Starter-Mischung in demselben Reaktor weiter mit Epoxiden/cyclischen Anhydriden und Kohlendioxid umgesetzt.

In einer weiteren bevorzugten Ausführungsform wird die gemäß der Schritte (α) und (β) aktivierte Katalysator-Starter-Mischung in einem anderen Reaktionsbehältnis (beispielsweise einem Rührkessel, Rohrreaktor oder Schlaufenreaktor) weiter mit Epoxiden/cyclischen Anhydriden und Kohlendioxid umgesetzt. In einer weiteren bevorzugten Ausführungsform wird die gemäß Schritt (α) vorbereitete Katalysator-Starter-Mischung in einem anderen Reaktionsbehältnis (beispielsweise einem Rührkessel, Rohrreaktor oder Schlaufenreaktor) gemäß den Schritten (β) und (γ) mit Epoxiden/cyclischen Anhydriden und Kohlendioxid umgesetzt.

Bei Reaktionsführung in einem Rohrreaktor werden die gemäß Schritt (α) vorbereitete Katalysator-Starter-Mischung oder die gemäß der Schritte (α) und (β) aktivierte Katalysator-Starter-Mischung und gegebenenfalls weitere Starter sowie Epoxiden/cyclischen Anhydriden und Kohlendioxid kontinuierlich durch ein Rohr gepumpt. Bei Verwendung einer gemäß dem Schritt (α) vorbereiteten Katalysator-Starter-Mischung kann die zweite Aktivierungsstufe gemäß Schritt (β) im ersten Teil des Rohrreaktors und die Terpolymerisation gemäß Schritt (γ) im zweiten Teil des Rohrreaktors erfolgen. Die molaren Verhältnisse der Reaktionspartner können dabei je nach gewünschtem Polymer variieren.

In einer bevorzugten Ausführungsform wird Kohlendioxid in seiner flüssigen oder überkritischen Form zudosiert, um eine optimale Mischbarkeit der Komponenten zu ermöglichen. Das Kohlendioxid kann am Eingang des Reaktors und/oder über Dosierstellen, die entlang des Reaktors angeordnet sind, in dem Reaktor eingebracht werden. Eine Teilmenge der Epoxiden/cyclischen Anhydriden kann am Eingang des Reaktors eingebracht werden. Die Restmenge der Epoxide/cyclischen Anhydride wird bevorzugt über mehrere Dosierstellen, die entlang des Reaktors angeordnet sind, in den Reaktor eingebracht. Vorteilhafterweise werden Mischelemente, wie sie zum Beispiel von der Firma Ehrfeld

Mikrotechnik BTS GmbH vertrieben werden, zur besseren Durchmischung der Reaktionspartner eingebaut, oder Mischer-Wärmetauscherelemente, die gleichzeitig die Durchmischung und Wärmeabfuhr verbessern. Bevorzugt wird durch die Mischelemente zudosiertes $CO_2$ und Epoxiden/cyclischen Anhydride mit der Reaktionsmischung vermischt. In einer alternativen Ausführungsform werden verschiedene Volumenelemente der Reaktionsmischung miteinander vermischt.

Schlaufenreaktoren können ebenfalls zur Herstellung der erfindungsgemäß einsetzbaren Polyethercarbonatpolyole mit ungesättigten Gruppen verwendet werden. Hierunter fallen im Allgemeinen Reaktoren mit interner und/oder externer Stoffrückführung (ggf. mit im Kreislauf angeordneten Wärmetauscherflächen), wie beispielsweise ein Strahlschlaufenreaktor, Jet-Loop Reaktor oder Venturi-Loop Reaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren oder mehreren hintereinander geschalteten Rührkesseln.

Um einen vollständigen Umsatz zu realisieren, kann dem Reaktionsapparat, in dem der Schritt (γ) durchgeführt wird, häufig ein weiterer Kessel oder ein Rohr ("Verweilrohr") nachgeschaltet werden in welchem nach der Reaktion vorhandene Restkonzentrationen freier Epoxide/cyclischer Anhydride abreagieren. Bevorzugt liegt der Druck in diesem nachgeschalteten Reaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 10 bis 150°C und besonders bevorzugt bei 20 bis 100°C. Das Reaktionsgemisch enthält am Ende der Nachreaktionszeit bzw. am Ausgang des nachgeschalteten Reaktors vorzugsweise weniger als 0,05 Gew.% Epoxid/cyclisches Anhydrid. Die Nachreaktionszeit bzw. die Verweilzeit im nachgeschalteten Reaktor beträgt bevorzugt 10 min bis 24 h, besonders bevorzugt 10 min bis 3 h.

Als geeignete H-funktionelle Starterverbindungen (Starter) können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz können beispielsweise eine oder mehrere Verbindungen ausgewählt werden aus der Gruppe umfassend ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z.B. sogenannte Jeffamine® von Huntsman, wie z.B. D-230, D-400, D-2000, T-403, T-3000, T-5000 oder entsprechende Produkte der BASF, wie z.B. Polyetheramin D230, D400, D200, T403, T5000), Polytetrahydrofurane (z.B. PolyTHF® der BASF, wie z.B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten. Beispielhaft handelt es sich bei den C1-C23 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propargylalkohol, 2-Methyl-2-propanol, 1-*tert*-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, *tert*-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Startersubstanzen können auch aus der Substanzklasse der Polyetherpolyole ausgewählt sein, insbesondere solchen mit einem Molekulargewicht $M_n$ im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Bayer MaterialScience AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem Molekulargewicht $M_n$ im Bereich von 200 bis 4500 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten können z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt werden. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit $M_n$ = 150 bis 2000 g/mol zur Herstellung der Polyethercarbonatpolyole eingesetzt.

Des Weiteren können als H-funktionelle Startersubstanzen Polycarbonatdiole eingesetzt werden, insbesondere solche mit einem Molekulargewicht $M_n$ im Bereich von 150 bis 4500 g/mol, vorzugsweise 500 bis 2500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der Bayer MaterialScience AG verwendet werden, wie z.B. Desmophen® C 1100 oder Desmophen® C 2200.

In einer weiteren Ausführungsform der Erfindung können Polyethercarbonatpolyole und/oder Polyetherestercarbonatpolyole als H-funktionelle Startersubstanzen eingesetzt werden. Insbesondere können Polyetherestercarbonatpolyole eingesetzt werden. Diese als H-funktionelle Startersubstanzen eingesetzten Polyetherestercarbonatpolyole können hierzu in einem separaten Reaktionsschritt zuvor hergestellt werden.

Die H-funktionellen Startersubstanzen weisen im Allgemeinen eine OH-Funktionalität (d.h. Anzahl an für die Polymerisation aktiven H-Atomen pro Molekül) von 1 bis 8, bevorzugt von 2 bis 6 und besonders bevorzugt von 2 bis 4 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole mit einer Zusammensetzung nach der allgemeinen Formel (III),

$$HO\text{-}(CH_2)_x\text{-}OH \qquad (III)$$

wobei x eine Zahl von 1 bis 20, bevorzugt eine gerade Zahl von 2 bis 20 ist. Beispiele für Alkohole gemäß Formel (III) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (III) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Starterverbindungen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder

tri-H-funktionellen Starterverbindung und Propylenoxid bzw. einer di- oder tri-H-funktionellen Starterverbindung, Propylenoxid und Ethylenoxid aufgebaut ist. Die Polyetherpolyole haben bevorzugt eine OH-Funktionalität von 2 bis 4 und ein Molekulargewicht $M_n$ im Bereich von 62 bis 4500 g/mol und insbesondere ein Molekulargewicht $M_n$ im Bereich von 62 bis 3000 g/mol.

Doppelmetallcyanid (DMC)-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyoxyalkylenpolyolen bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. *tert*-Butanol) noch einen Polyether mit einem zahlenmittleren Molekulargewicht größer als 500 g/mol enthalten.

Die erfindungsgemäß einsetzbaren DMC-Katalysatoren werden vorzugsweise erhalten, indem man

(1.) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(2.) wobei im zweiten Schritt der Feststoff aus der aus (a) erhaltenen Suspension durch bekannte Techniken (wie Zentrifugation oder Filtration) abgetrennt wird,
(3.) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(4.) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäß einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder tert-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze weisen bevorzugt eine Zusammensetzung nach der allgemeinen Formel (IV) auf,

$$M(X)_n \qquad (IV)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanid, Isocyanat, Isocyanat, Isothiocyanat, Carboxylat, Oxalat und Nitrat;
n ist 1, wenn X = Sulfat, Carbonat oder Oxalat und
n ist 2, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (V) auf,

$$M_r(X)_3 \qquad (V)$$

wobei

M ausgewählt ist aus den Metallkationen $Fe^{3+}$, $Al^{3+}$, $Co^{3+}$ und $Cr^{3+}$,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanate Isocyanat, Isothiocyanat, Carboxylat, Oxalat und Nitrat;
r ist 2, wenn X = Sulfat, Carbonat oder Oxalat und

r ist 1, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (VI) auf,

$M(X)_s$ (VI)

wobei

M ausgewählt ist aus den Metallkationen $Mo^{4+}$, $V^{4+}$ und $W^{4+}$,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat und
s ist 4, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (VII) auf,

$M(X)_t$ (VII)

wobei

M ausgewählt ist aus den Metallkationen $Mo^{6+}$ und $W^{6+}$,
X umfasst ein oder mehrere (d.h. verschiedene) Anionen, vorzugsweise Anionen ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat und
t ist 6, wenn X = Halogenid, Hydroxid, Carboxylat, Cyanat, Thiocyanat, Isocyanat, Isothiocyanat oder Nitrat.

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.
Zur Herstellung der Doppelmetallcyanid-Verbindungen geeignete Metallcyanidsalze weisen bevorzugt eine Zusammensetzung nach der allgemeinen Formel (VIII) auf

$(Y)_a M'(CN)_b (A)_c$ (VIII)

wobei
M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II), Y ausgewählt ist aus einem oder mehreren Metallkationen der Gruppe bestehend aus Alkalimetall (d.h. $Li^+$, $Na^+$, $K^+$, $Rb^+$) und Erdalkalimetall (d.h. $Be^{2+}$, $Mg^{2+}$, $Ca^{2+}$, $Sr^{2+}$, $Ba^{2+}$), A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.
Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).
Bevorzugte Doppelmetallcyanid-Verbindungen, die in den erfindungsgemäß einsetzbaren DMC-Katalysatoren enthalten sind, sind Verbindungen mit Zusammensetzungen nach der allgemeinen Formel (IX)

$M_x[M'_{x'}(CN)_y]_z$ (IX)

worin M wie in den Formeln (III) bis (VI) und
M' wie in Formel (VII) definiert ist, und
x, x', y und z ganzzahlig sind und so gewählt, dass die Elektronenneutralität der Doppelmetallcyanidverbindung gegeben ist.
Vorzugsweise ist

x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zink-hexacyanoiridat(III), Zinkhexacyanoferrat(III) und Kobalt(II)hexacyanokobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt kann Zinkhexacyanokobaltat(III) verwendet werden.

Die bei der Herstellung der DMC-Katalysatoren zusetzbaren organischen Komplexliganden sind beispielsweise in US-A 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert-butylether, Diethylenglykol-mono-tert-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, *tert*-Butanol 2-Methyl-3-buten-2-ol, 2-Methyl-3-butin-2-ol, Ethylenglykol-mono-*tert*-butylether und 3-Methyl-3-oxetan-methanol.

Optional werden in der Herstellung der erfindungsgemäß einsetzbaren DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der erfindungsgemäß einsetzbaren DMC-Katalysatoren die wässrigen Lösungen des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz zu Metallcyanidsalz von 2,25 zu 1,00. Das Metallcyanidsalz (z.B. Kaliumhexacyanokobaltat) wird in Gegenwart des organischen Komplexliganden (z.B. tert-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt kann die Isolierung des Feststoffs (d.h. die Vorstufe des Katalysators) aus der Suspension durch bekannte Techniken, wie Zentrifugation oder Filtration, erfolgen.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation).

Auf diese Weise können zum Beispiel wasserlösliche Nebenprodukte, wie Kaliumchlorid, aus dem erfindungsgemäß einsetzbaren Katalysator entfernt werden. Bevorzugt liegt die Menge des organischen Komplexliganden in der wässrigen Waschlösung zwischen 40 und 80 Gew.%, bezogen auf die Gesamtlösung.

Optional wird im dritten Schritt der wässrigen Waschlösung eine weitere komplexbildende Komponente, bevorzugt im Bereich zwischen 0,5 und 5 Gew.%, bezogen auf die Gesamtlösung, zugefügt.

Außerdem ist es vorteilhaft, den isolierten Feststoff mehr als einmal zu waschen. Vorzugsweise wird in einem ersten Waschschritt (3.-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäß einsetzbaren Katalysator zu entfernen. Besonders bevorzugt liegt die Menge des ungesättigten Alkohols in der wässrigen Waschlösung zwischen 40 und 80 Gew.%, bezogen auf die Gesamtlösung des ersten Waschschritts. In den weiteren Waschschritten (3.-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus ungesättigtem Alkohol und weiterer komplexbildender Komponente (bevorzugt im Bereich zwischen 0,5 und 5 Gew.%, bezogen auf die Gesamtmenge der Waschlösung des Schrittes (3.-2)), als Waschlösung eingesetzt und der Feststoff damit einmal oder mehrmals, vorzugsweise einmal bis dreimal gewaschen.

Der isolierte und gegebenenfalls gewaschene Feststoff kann anschließend, gegebenenfalls nach Pulverisierung, bei Temperaturen von 20 - 100°C und bei Drücken von 0,1 mbar bis Normaldruck (1013 mbar) getrocknet werden.

Ein bevorzugtes Verfahren zur Isolierung der erfindungsgemäß einsetzbaren DMC-Katalysatoren aus der Suspension durch Filtration, Filterkuchenwäsche und Trocknung wird in WO-A 01/80994 beschrieben.

Die ungesättigten Comonomere können statistisch oder blockweise in den Polyethercarbonatpolyolen verteilt sein. Auch Gradientenpolymere sind einsetzbar.

In einem weiteren Aspekt des Verfahrens erfolgt die Umsetzung des Polyethercarbonatpolyols mit ungesättigten Gruppen mit der phosphorfunktionellen Verbindung gemäß Formel (Ia) bei einer Temperatur größer oder gleich 100 °C und kleiner oder gleich 220 °C. Dieser Temperaturbereich hat sich im Rahmen einer effizienten Verfahrensführung mit einer hinreichenden Reaktionsgeschwindigkeit als besonders geeignet herausgestellt. Vorteilhafterweise ergibt sich durch diese Reaktionsführung eine Endprodukt ohne Katalysatorbeimischungen. Ohne durch die Theorie gebunden zu sein erfolgt innerhalb dieses Temperaturbereiches wahrscheinlich eine anionische Addition der phosphorfunktionellen Verbindung an die ungesättigten Gruppen des Polyethercarbonatpolyols. Tiefere Temperaturen können zu einer nur unbefriedigenden Umsetzung der phosphorfunktionellen Verbindung führen, wohingegen höhere Temperaturen zu einer verringerten Ausbeute, durch das Ansteigen von Nebenreaktionen, führen können.

In einem weiteren Aspekt des Verfahrens erfolgt die Umsetzung des Polyethercarbonatpolyols mit ungesättigten Gruppen mit der phosphorfunktionellen Verbindung gemäß Formel (Ia) bei einer Temperatur größer oder gleich 0 °C und kleiner oder gleich 100 °C und es wird eine Verbindung ausgewählt aus der Gruppe der basischen Katalysatoren hinzugegeben werden. Es können beispielsweise basische Katalysatoren eingesetzt werden, welche dem Fachmann für eine Verwendung innerhalb einer Michael-Addition bekannt sind. Bevorzugt können als basische Katalysatoren tertiäre Amine, wie beispielsweise Diazabicyclooctan (DABCO), Amidine, wie beispielsweise 1,5-Diazabicyclo[5.4.0]undec-5-en (BDU) oder 1,8-Diazabicyclo[5.4.0]undec-7-en (DBU), Guanidine, wie beispielsweise Triazabicyclodecen, N-Methyl-triazabicyclodecen, N-Butyltriazabicyclodecen oder Tetramethylguanidin, Pentamethylguanidin, und/oder Phosphoriminbasen oder Proazaphosphatrane als basische Katalysatoren eingesetzt werden. Es können auch Mischungen unterschiedlicher basischer Katalysatoren eingesetzt werden. Der Einsatz dieser Katalysatoren in dem angegebenen Temperaturbereich führt zu eine schnellen und nebenproduktarmen Umsetzung der phosphorfunktionellen Verbindungen an die Polyethercarbonatpolyole mit ungesättigten Gruppen.

In einem weiteren Aspekt des Verfahrens erfolgt die Umsetzung des Polyethercarbonatpolyols mit ungesättigten Gruppen mit der phosphorfunktionellen Verbindung gemäß Formel (Ia) bei einer Temperatur größer oder gleich 0 °C und kleiner oder gleich 100 °C und es wird eine Verbindung ausgewählt aus der Gruppe der Photoinitiatoren, Peroxide, Azoverbindungen, metallaktivierten Peroxide und/oder Redoxinitiatoren hinzugegeben. Die Umsetzung des Polyethercarbonatpolyols mit ungesättigten Gruppen mit der phosphorfunktionellen Verbindung kann beispielsweise mit

- Initiatoren, die in T. Myers, N. Kirk-Othmer, Encyclopedia of Chemical Technology (5th Edition) (2005), 14 274-311 oder in J. C.Bevington, Makromolekulare Chemie, Macromolecular Symposia (1987), 10(1), 89,
- Photoinitiatoren, die in J.P. Fouassier, X. Allonas, J. Lalevee; C. Dietlin, Photochemistry and Photophysics of Polymer Materials (2010), 351-419,
- metallaktivierten Peroxiden, die in C. Sma, Angewandte Makromolekulare Chemie (1969), 9 165-181 oder mit
- Redoxinitiatoren, die in G. S. Misra,; U. D. N. Bajpai Progress in Polymer Science (1982) 8 (1-2), 61-131

beschrieben sind, beschleunigt werden.

Bevorzugt werden Photoinitiatoren eingesetzt. Erfindungsgemäß einsetzbare Photoinitiatoren sind z.B. Bis(2,4,6-Trimethylbenzoyl)-phenylphosphinoxid, Diphenylmesitoyl-phosphinoxid, Campherchinon, Isopropylthioxanthon, Michlers Keton, Benzophenon, Benzoinmethylether, Dimethoxyphenylacetophenon oder 2,2-Dimethyl-2-hydroxyacetophenon.

Die Radikalinitiatoren können in Mengen von größer oder gleich 0,01 Gew.-% und kleiner oder gleich 2 Gew.-% bezogen auf das Polyethercarbonatpolyol eingesetzt werden. Redoxinitiatoren sind dabei ein Gemisch aus einer

oxidierenden und einer reduzierenden Substanz. Die zur Funktionalisierung eingesetzten phosphorfunktionellen Verbindungen können dabei auch die Funktion einer reduzierenden Substanz übernehmen. Photoinitiatoren des Typs II bedürfen des Zusatzes eines Wasserstoffdonors, wie eines Amins oder einer weitere Phosphinverbindung, wobei auch die phosphorfunktionellen Verbindungen, welche an die ungesättigten Gruppen addiert werden, diese Funktion erfüllen können.

Des Weiteren erfindungsgemäß sind phosphorfunktionelle Polyethercarbonatpolyole erhältlich nach dem erfindungsgemäßen Verfahren. Die nach dem erfindungsgemäßen Verfahren herstellbaren phosphorfunktionellen Polyethercarbonatpolyole zeigen eine gute flammhemmende Wirkung und lassen sich durch ihren sterischen Aufbau und der daraus resultierenden Viskosität sehr gut innerhalb weiterer Verfahren, wie z.B. einer anschließenden Vernetzung, weiterverarbeiten. Die erfindungsfindungsgemäßen phosphorfunktionellen Polyethercarbonatpolyole oder deren Umsetzungsprodukte mit Isocyanaten können darüber hinaus bei Bedarf zusätzlich mit üblichen externen Flammschutzadditiven, wie Halogenkohlenwasserstoffen, ggf. mit Antimontrioxid als Synergist, (verkapselten) rotem Phosphor, monomeren oder oligomeren Phosphorverbindungen, polyhedralen oligomeren Silsesquioxanen, anderen Siloxanen, Melaminisocyanurat, Melaminpolyphosphat, Cyclophosphazenen, Carbonnanotubes, Fullerenen, Montmorillonit oder Aluminiumhydroxid additiviert werden. Die Zugabe weiterer Additive, wie sie zum Beispiel in Progress in Polymer Science 34 (2009) 1068-1133 beschrieben sind, ist auch möglich.

In einer Ausgestaltung des Verfahrens können in einem weiteren Verfahrensschritt die phosphorfunktionellen Polyethercarbonatpolyole durch Zugabe von Di- oder Polyisocyanaten vernetzt werden. In einer Ausführungsform werden Mischungen von Polyethercarbonatpolyolen und phosphorfunktionellen Polyethercarbonatpolyolen mit einem oder mehreren Di- oder Polyisocyanaten umgesetzt. Bevorzugt wird hierbei wenigstens ein phosphorfunktionelles Polyethercarbonatpolyol mit einem oder mehreren Di- oder Polyisocyanaten umgesetzt. Die Einzelheiten der Umsetzung von Polyolen mit Di- oder Polyisocyanaten sind dabei dem Fachmann aus der Polyurethan-Chemie bekannt.

Des Weiteren erfindungsgemäß sind vernetzte phosphorfunktionelle Polyethercarbonatpolyol-Polymere erhältlich nach dem erfindungsgemäßen Verfahren. Die vernetzten phosphorfunktionellen Polyethercarbonatpolyol-Polymere zeichnen sich durch reproduzierbare mechanische Eigenschaften und eine kontrollierbare Reaktionsführung aus, da die Edukte eine enge und definierte Molekulargewichtsverteilung aufweisen und die weitere Vernetzung erst nachgelagert erfolgt. Auf diese Art und Weise können Nebenreaktionen im Rahmen einer Vernetzung der Polyethercarbonatpolyole schon im Rahmen der Phosphorfunktionalisierung vermieden werden. Des Weiteren zeigen die vernetzten phosphorfunktionellen Polyethercarbonatpolyol-Polymere gute flammhemmende Eigenschaften ohne nennenswerte Einbußen im Bereich der sonstigen Qualitätskriterien für vernetzte Systeme wie Steifigkeit, mechanische Belastbarkeit, Abriebeigenschaften, Elastizität o.ä..

Die nach dem erfindungsgemäßen Verfahren erhältlichen phosphorfunktionellen Polyethercarbonatpolyole können als flammhemmende Haftvermittler, Füllstoffaktivatoren oder Additive verwendet werden. Gerade die erfindungsgemäße Kombination der unterschiedlichen funktionellen Gruppen im Polymer kann aufgrund der Kombination hydrophiler und hydrophober Eigenschaften zu einer besonders guten Eignung führen, unterschiedliche polare Grenzflächen miteinander zu verbinden. Demzufolge lassen sich die erfindungsgemäß herstellbaren phosphorfunktionellen Polyethercarbonatpolyole besonders gut in den Fällen einsetzten, in denen eine Haftung zwischen unterschiedlichen polaren Grenzflächen gewünscht ist. Ebenso lässt sich durch den Einsatz der phosphorfunktionellen Polyethercarbonatpolyole eine bessere Dispergierung von Füllstoffen erreichen. Dieses kann zu einer schnelleren Reaktionsführung im Rahmen von Vernetzungsreaktionen und demzufolge zu einem gleichmäßigeren Endprodukt beitragen.

Des Weiteren können die vernetzten phosphorfunktionellen Polyethercarbonatpolyol-Polymere, welche nach dem erfindungsgemäßen Verfahren erhältlich sind, als flammhemmende Beschichtung, Schaum, Dichtmasse, thermoplastischer Kunststoff, duromerer Kunststoff, Kautschuk Verwendung finden. Diese Verwendung der vernetzten phosphorfunktionellen Polyethercarbonatpolyol-Polymere kann besonders vorteilhaft sein, da durch die gewählte Verfahrensführung die übrigen Gebrauchseigenschaften der vernetzten phosphorfunktionellen Polyethercarbonatpolyol-Polymere durch die flammhemmende Funktionalisierung nur unwesentlich beeinträchtigt werden. Dies hochwahrscheinlich bedingt durch eine geringere Anzahl an unerwünschten Nebenprodukten im Rahmen der Synthese der Polyethercarbonatpolyole mit ungesättigten Gruppen, einer gleichbleibenderen Molekulargewichtsverteilung der eingesetzten Polyethercarbonatpolyole mit ungesättigten Gruppen und einer kontrollierteren Phosphorfunktionalisierung.

Ebenso im Sinne der Erfindung sind Formkörper aufweisend eine flammhemmende Schicht umfassend ein flammhemmendes, vernetztes phosphorfunktionelles Polyethercarbonatpolyol-Polymer herstellbar nach dem erfindungsgemäßen Verfahren. Die erfindungsgemäß hergestellten vernetzten phosphorfunktionellen Polyethercarbonatpolyol-Polymere können sich besonders zum Aufbau flammhemmender, mechanisch stabiler Schichten auf Formkörpern eigenen, da sich die erfindungsgemäßen Polyethercarbonatpolyole einfach und reproduzierbar auf Formkörpern platzieren lassen und eine Vernetzungsreaktion mit Diiso- oder Polyisocyanaten einfach und reproduzierbar durchführbar ist.

Hinsichtlich weiterer Vorteile und Merkmale des vorbeschriebenen Formkörpers wird hiermit explizit auf die Erläuterungen im Zusammenhang mit den erfindungsgemäßen vernetzten phosphorfunktionellen Polyethercarbonatpolyol-Polymere sowie dem erfindungsgemäßen Verfahren verwiesen. Auch sollen erfindungsgemäße Merkmale und

Vorteile der erfindungsgemäßen phosphorfunktionellen Polyethercarbonatpolyole auch für das erfindungsgemäße Verfahren und die erfindungsgemäßen vernetzten phosphorfunktionellen Polyethercarbonatpolyol-Polymere anwendbar sein und als offenbart gelten und umgekehrt. Unter die Erfindung fallen auch sämtliche Kombinationen aus zumindest zwei von in der Beschreibung und/oder den Ansprüchen offenbarten Merkmalen.

Beispiele

Eingesetzte H-funktionelle Startersubstanz (Starter):

PET-1 difunktionelles Poly(oxypropylen)polyol mit einer OH-Zahl von 112 $mg_{KOH}/g$

Eingesetztes Alkylenoxid, das keine Doppelbindungen trägt:

PO Propylenoxid

Eingesetztes Comonomer:

MSA Maleinsäureanhydrid, enthaltend elektronenarme Doppelbindungen
AGE Allylglycidylether, enthaltend elektronenreiche Doppelbindungen

Eingesetztes Phosphor-Verbindung:

D OPO 9,10-Dihydro-9-oxa-phosphaphenanthren-10-oxid

Eingesetzter Radikalstarter:

Irgacure 819 Bis(2,4,6-trimethylbenzoyl)-phenylphosphinoxid

Der DMC-Katalysator wurde hergestellt nach Beispiel 6 der WO-A 01/80994.

Die Polymerisationsreaktionen wurden in einem 300 ml Druckreaktor der Fa. Parr durchgeführt. Der in den Beispielen eingesetzte Druckreaktor hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem U-förmig gebogenen Tauchrohr mit 6 mm Außendurchmesser, das bis 5 mm über den Boden in den Reaktor ragte und das mit Kühlwasser von ca. 10°C durchströmt wurde. Der Wasserstrom wurde über ein Magnetventil ein- und ausgeschaltet. Weiterhin war der Reaktor mit einem Einleitrohr sowie einem Thermofühler mit 1,6 mm Durchmesser ausgestattet, die bis 3 mm über den Boden in den Reaktor ragten.

Die Heizleistung des elektrischen Heizmantels lag während der Aktivierung [erste Aktivierungsstufe] im Durchschnitt bei ca. 20% der maximalen Heizleistung. Durch die Regelung schwankte die Heizleistung um $\pm 5\%$ der maximalen Heizleistung. Das Auftreten einer erhöhten Wärmeentwicklung im Reaktor, hervorgerufen durch die rasche Umsetzung von Propylenoxid während der Aktivierung des Katalysators [zweite Aktivierungsstufe] wurde beobachtet über eine reduzierte Wärmeleistung des Heizmantels, Einschalten der Gegenkühlung und gegebenenfalls einen Temperaturanstieg im Reaktor. Das Auftreten einer Wärmeentwicklung im Reaktor, hervorgerufen durch die kontinuierliche Umsetzung von Propylenoxid während der Reaktion [Polymerisationsstufe] führte zu einem Absenken der Leistung des Heizmantels auf ca. 8% der maximalen Heizleistung. Durch die Regelung schwankte die Heizleistung um $\pm 5\%$ der maximalen Heizleistung.

Bei dem in den Beispielen eingesetzten Hohlwellenrührer handelte es sich um einen Hohlwellenrührer, bei dem das Gas über eine hohle Welle des Rührers in die Reaktionsmischung eingeleitet wurde. Der auf der Hohlwelle angebrachte Rührkörper wies vier Arme auf, hatte einen Durchmesser von 35 mm und eine Höhe von 14 mm. An jedem

Ende des Arms waren zwei Gasauslässe angebracht, die einen Durchmesser von 3 mm aufwiesen. Durch die Drehung des Rührers entstand ein Unterdruck derart, dass das über der Reaktionsmischung befindliche Gas ($CO_2$ und ggf. Alkylenoxid) abgesaugt wurde und über die Hohlwelle des Rührers in die Reaktionsmischung eingeleitet wurde.

Bei dem in einigen Beispielen eingesetzten Impellerrührer handelte es sich um eine Schrägblatt-Turbine, bei dem auf der Rührwelle im Abstand von 7 mm insgesamt zwei Rührstufen mit jeweils vier Rührflügeln (45°) angebracht waren, die einen Durchmesser von 35 mm und eine Höhe von 10 mm aufwiesen.

a) Bei der Terpolymerisation von Propylenoxid, Allylglycidylether und $CO_2$ resultiert neben dem cyclischen Propylencarbonat das Polyethercarbonatpolyol, welches einerseits in Formel (Xa) gezeigte Polycarbonat-Einheiten enthält,

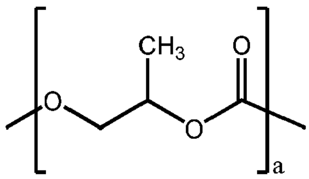 bzw. 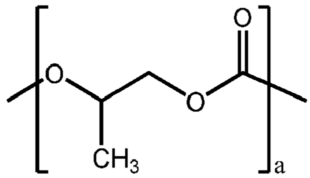 (Xa)

und andererseits in Formel (Xb) gezeigte Polyether-Einheiten enthält.

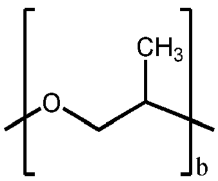 bzw. 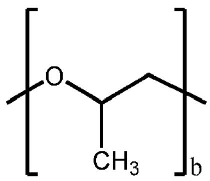 (Xb)

Bei Einbau von cyclischen Anhydriden in die Polymerkette enthält diese zusätzlich Estergruppen.

Die Charakterisierung des Reaktionsgemisches erfolgte durch $^1$H-NMR Spektroskopie und Gelpermeations-Chromatographie.

Das Verhältnis der Menge an cyclischem Propylencarbonat zu Polyethercarbonatpolyol (Selektivität; Verhältnis c/a) sowie der Anteil der nicht umgesetzten Monomere (Propylenoxid $R_{PO}$, Allylglycidylether $R_{AGE}$ in mol%) wurden mittels $^1$H-NMR Spektroskopie bestimmt. Dazu wurde jeweils eine Probe der nach der Reaktion erhaltenen Reaktionsmischung in deuteriertem Chloroform gelöst und auf einem Spektrometer der Firma Bruker (AV400, 400 MHz) vermessen.

Anschließend wurde die Reaktionsmischung mit Dichlormethan (20 ml) verdünnt und die Lösung durch einen Fallfilmverdampfer geleitet. Die Lösung (0,1 kg in 3 h) lief entlang der inneren Wand eines von außen auf 120°C beheizten Rohres mit 70 mm Durchmesser und 200 mm Länge herab, wobei die Reaktionsmischung durch drei mit einer Geschwindigkeit von 250 U/min rotierende Rollen mit 10 mm Durchmesser jeweils gleichmäßig als dünner Film auf der inneren Wand des Fallfilmverdampfers verteilt wurde. Im Inneren des Rohres wurde über eine Pumpe ein Druck von 3 mbar eingestellt. Die von leicht flüchtigen Bestandteilen (nicht umgesetzte Epoxide, cyclisches Carbonat, Lösungsmittel) gereinigte Reaktionsmischung wurde am unteren Ende des beheizten Rohres in einer Vorlage aufgefangen.

Das molare Verhältnis von Carbonatgruppen zu Ethergruppen im Polyethercarbonatpolyol (Verhältnis a/b) sowie der molare Anteil der in das Polymer eingebauten Comonomere wurden mittels $^1$H-NMR Spektroskopie bestimmt. Eine Probe der gereinigten Reaktionsmischung wurde dazu jeweils in deuteriertem Chloroform gelöst und auf einem Spektrometer der Firma Bruker (AV400, 400 MHz) vermessen.

Die relevanten Resonanzen im $^1$H-NMR Spektrum (bezogen auf TMS = 0 ppm), die zur Integration verwendet wurden, ergeben sich wie folgt:

| Signal | Verschiebung in ppm | Bezeichnung | Fläche entspricht Anzahl H-Atomen |
|---|---|---|---|
| I1 | 1,10 - 1,17 | $CH_3$-Gruppe der Polyether-Einheiten | 3 |
| I2 | 1,25 - 1,34 | $CH_3$-Gruppe der Polycarbonat-Einheiten | 3 |
| I3 | 1,45 - 1,48 | $CH_3$-Gruppe des cyclischen Carbonats | 3 |

(fortgesetzt)

| Signal | Verschiebung in ppm | Bezeichnung | Fläche entspricht Anzahl H-Atomen |
|---|---|---|---|
| I4 | 2,95 - 3,00 | CH-Gruppen des freien, nicht abreagierten Propylenoxids | 1 |
| I5 | 5,83 - 5,94 | CH Gruppe der in das Polymer über den Einbau von Allylglycidylether erhaltenen Doppelbindung | 1 |
| I6 | 6,22 - 6,29 | CH Gruppe der in das Polymer über den Einbau von Maleinsäureanhydrid erhaltenen Doppelbindung | 2 |
| I7 | 7,03 - 7,04 | CH Gruppe für freies, nicht abreagiertes Maleinsäureanhydrid | 2 |
| I8 | 2,59-2,66 & 2,75-2,78 | CH Gruppe des in das Polymer eingebauten DOPO | 2 |
| I9 | 1,74-1,84 | CH Gruppe des in das Polymer eingebauten DOPO | 2 |

Angegeben ist das molare Verhältnis der Menge an cyclischem Propylencarbonat zu Carbonat-Einheiten im Polyethercarbonatpolyol bzw. Polyetherestercarbonatpolyol (Selektivität c/a) und das molare Verhältnis von Carbonat- zu Ethergruppen im Polyethercarbonatpolyol bzw. Polyetherestercarbonatpolyol (a/b) sowie die Anteile des nicht umgesetzten Propylenoxids (in mol%) und Maleinsäureanhydrids (in mol%).
Unter Berücksichtigung der relativen Intensitäten wurden die Werte wie folgt berechnet:

Molares Verhältnis der Menge an cyclischem Propylencarbonat zu Carbonat-Einheiten im Polyethercarbonatpolyol bzw. Polyetherestercarbonatpolyol (Selektivität c/a):

$$c/a = I3 / I2 \qquad \text{(XI)}$$

Molares Verhältnis von Carbonatgruppen zu Ethergruppen im Polyethercarbonatpolyol bzw. Polyetherestercarbonatpolyol (a/b):

$$a/b = I2 / I1 \qquad \text{(XII)}$$

Der molare Anteil des nicht umgesetzten Propylenoxids ($R_{PO}$ in mol%) bezogen auf die Summe der bei der Aktivierung und der Copolymerisation eingesetzten Menge an Propylenoxid, berechnet sich nach der Formel:

$$R_{PO} = [(I4/1) / ((I1/3) + (I2/3) + (I3/3) + (I4/1))] \times 100\% \qquad \text{(XIII)}$$

Die Angaben zu den Anteilen A beziehen sich im Folgenden auf Polyetherestercarbonatpolyole, die unter Einsatz von Maleinsäureanhydrid als Comonomer erhalten wurden.
Der molare Anteil des nicht umgesetzten Maleinsäureanhydrids ($R_{MSA}$ in mol%) bezogen auf die Summe der bei der Aktivierung und der Copolymerisation eingesetzten Menge an Maleinsäureanhydrid, berechnet sich nach der Formel:

$$R_{MSA} = [(I6/2) / ((I6/2) + (I7/2))] \times 100\% \qquad \text{(XIV)}$$

Anteil an Carbonateinheiten in den Wiederholungseinheiten des Polyetherestercarbonatpolyols:

$$A_{Carbonat} = [(I2/3) / ((I1/3) + (I2/3) + (I6/2))] \times 100\% \qquad \text{(XV)}$$

Anteil der über den Einbau des Maleinsäureanhydrids resultierenden Doppelbindungen in den Wiederholungseinheiten des Polyetherestercarbonatpolyols:

$$A_{Doppelbindung} = [(I6/2) / ((I1/3) + (I2/3) + (I6/2))] \times 100\% \qquad (XVI)$$

Anteil an DOPO Einheiten in den Wiederholungseinheiten des Polyetherestercarbonatpolyols:

$$A_{DOPO} = [(I8/2) / ((I1/3) + (I2/3) + (I8/2) + (I6))] \times 100\% \qquad (XVII)$$

Die Angaben zu den Anteilen B beziehen sich im Folgenden auf Polyethercarbonatpolyole, die unter Einsatz von Allylglycidylether als Comonomer erhalten wurden.

Der Anteil an Carbonateinheiten in den Wiederholungseinheiten des Polyethercarbonatpolyols:

$$B_{Carbonat} = [(I2/3) / ((I1/3) + (I2/3) + (I5/1))] \times 100\% \qquad (XVIII)$$

Der Anteil der über den Einbau des Allylglycidylethers resultierenden Doppelbindungen in den Wiederholungseinheiten des Polyethercarbonatpolyols:

$$B_{Doppelbindung} = [(I5) / ((I1/3) + (I2/3) + (I5/1))] \times 100\% \qquad (XIX)$$

Der Anteil an DOPO Einheiten in den Wiederholungseinheiten des Polyethercarbonatpolyols:

$$B_{DOPO} = [(I9/2) / ((I1/3) + (I2/3) + (I9/2) + (I5))] \times 100\% \qquad (XX)$$

Herstellung der Polyethercarbonatpolyole

Polyethercarbonatpolyol A: Terpolymerisation von Propylenoxid, Maleinsäureanhydrid (9,5 mol-%) und $CO_2$

*[erste Aktivierungsstufe]*

In einem 970 ml Druckreaktor ausgestattet mit einem Gaseintragsrührer wurde eine Mischung aus DMC-Katalysator (104 mg) und PET-1 (130 g) vorgelegt und 30 min bei 130°C in einem partiellen Vakuum (50 mbar) unter Durchleiten von Argon durch die Reaktionsmischung gerührt.

*[zweite Aktivierungsstufe]*

Nach Aufpressen von 15 bar $CO_2$, wobei ein leichter Temperaturabfall zu beobachten war, und Wiedererreichen einer Temperatur von 130°C wurden 13,0 g einer Monomermischung (15 Gew.-% Maleinsäureanhydrid [entsprechend 9,5 Mol%] gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 13,0 g einer Monomermischung wurde ein zweites und drittes Mal wiederholt.

*[Polymerisationsstufe]*

Nach Abkühlen auf 100°C wurden weitere 186,0 g der Monomermischung (15 Gew.-% Maleinsäureanhydrid, entsprechend 9,5 Mol%) über eine HPLC-Pumpe (6 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt.

*Produkteigenschaften:*

Das resultierende Gemisch war frei von den eingesetzten Monomeren Propylenoxid ($R_{PO}$ = 0%) und Maleinsäureanhydrid ($R_{MSA}$ = 0%).

| | | |
|---|---|---|
| Selektivität | c/a | 0,04 |
| | a/b | 0,27 |
| $A_{Carbonat}$ in % | | 21,2 |
| $A_{Doppelbindung}$ in % | | 5,7 |
| Molekulargewicht in g/mol | $M_n$ | 4175 |
| Polydispersität | | 1,2 |
| OH-Zahl in $mg_{KOH}/g$ | | 38,0 |

Beispiel 1: Herstellung von DOPO-haltigem Polyethercarbonatpolyol

In einem 250 ml Zweihalskolben wurden DOPO (12,01 g 0,06 mol) und DBU (1,69 g, 0,01 mol) in THF (40 mL) gelöst. Anschließend wurde eine weitere Lösung aus Polyethercarbonatpolyol A (50,0 g) in THF (130 mL) hergestellt. Diese Polyethercarbonatpolyol-Lösung wurde mit Hilfe eines Tropftrichters in den Zweihalskolben überführt. Die Reaktionsmischung wurde für eine Stunde gerührt. Anschließend wurde das Lösungsmittel bei vermindertem Druck entfernt.

*Produkteigenschaften:*

| | | |
|---|---|---|
| $A_{DOPO}$ in % | | 4,84 (1,95 wt % P) |
| Molekulargewicht in g/mol | $M_n$ | 3921 |
| Polydispersität | | 1,3 |
| OH-Zahl in $mg_{KOH}/g$ | | 34,3 |

Herstellung der Polyurethane

Beispiel 2: Herstellung eines Polyurethans aus Phosphorhaltigem Polyethercarbonatpolyol

Für die Herstellung von Phosphorhaltigem Polyurethan (Probe PU-1) wurde das DOPO-haltige Polyethercarbonatpolyol aus Beispiel 1 (8,2 g) mit einer äquimolaren Menge aliphatischen Polyisocyanates (HDI-Trimerisat, Desmodur N3300, 1,0 g) und 1000 ppm Dibutylzinnlaurat versetzt. Die Probe wurde auf einer planaren Metallplatte ausgehärtet. Anschließend wurde die Phosphorhaltige Polyurethan-Probe (1,5 g, 20 x 15 x 2 mm) für 10 s einer Flamme ausgesetzt, um die Flammfestigkeit zu überprüfen

Beispiel 3 (Vgl.): Herstellung eines Polyurethans aus Polyethercarbonatpolyol

Für die Herstellung von Polyurethan ohne Phosphor (Probe PU-2) wurde das Polyethercarbonatpolyol A (7,4 g) mit einer äquimolaren Menge aliphatischen Polyisocyanates (HDI-Trimerisat, Desmodur N3300, 1,0 g) und 1000 ppm Dibutylzinnlaurat versetzt. Die Probe wurde auf einer planaren Metallplatte ausgehärtet. Anschließend wurde die Polyurethan-Probe (1,5 g, 20 x 15 x 2 mm) für 10 s einer Flamme ausgesetzt, um die Flammfestigkeit zu überprüfen

Ergebnisse des Flammtests

Die Ergebnisse aus dem Flammtest sind für die Polyurethan-Probe aus Beispiel 2 und die Polyurethan-Probe aus Vergleichsbeispiel 3 in der nachfolgenden Tabelle gegeben. Der angegebene Phosphorgehalt bezieht sich auf die Polyurethan-Probe.

| Beispiel | Phosphorgehalt (wt%) | Aussehen der Probe während der Beflammungsdauer von 10s | Aussehen der Probe 1 s nach Beflammung | Aussehen der Probe 30 s nach Beflammung | Flammfestigkeit |
|---|---|---|---|---|---|
| 2 | 1,7 | Die Flammenhöhe beträgt 26 mm | Keine Flamme sichtbar | Keine Flamme sichtbar | Flammhemmend |
| | | Die Probe ist oberflächlich geschmolzen | Die Probe ist oberflächlich geschmolzen | Die Probe ist oberflächlich geschmolzen | |
| 3 (Vgl.) | -- | Die Flammenhöhe beträgt 30 mm | Die Probe brennt selbstständig mit einer Flammenhöhe von 35 mm weiter | Keine Flamme sichtbar | Entflammbar |
| | | Es bilden sich brennende Tropfen | Es bilden sich brennende Tropfen | Die Probe ist sichtlich geschmolzen | |
| Vgl. Vergleichsbeispiel | | | | | |

Vergleich

Der Vergleich der Resultate aus Beispiel 2 mit dem Vergleichsbeispiel 3 zeigt, dass die Phosphorhaltige Polyurethan-Probe eine weitaus höhere Flammfestigkeit besitzt.

Herstellung der Polyethercarbonatpolyole

Polyethercarbonatpolyol B: Terpolymerisation von Propylenoxid, Allylglycidylether (9,5 mol-%) und $CO_2$

*[erste Aktivierungsstufe]*

In einem 970 ml Druckreaktor ausgestattet mit einem Gaseintragsrührer wurde eine Mischung aus DMC-Katalysator (48 mg) und PET-1 (80 g) vorgelegt und 30 min bei 130°C in einem partiellen Vakuum (50 mbar) unter Durchleiten von Argon durch die Reaktionsmischung gerührt.

*[zweite Aktivierungsstufe]*

Nach Aufpressen von 15 bar $CO_2$, wobei ein leichter Temperaturabfall zu beobachten war, und Wiedererreichen einer Temperatur von 130°C wurden 8,0 g einer Monomermischung (16,7 Gew.% Allylglycidylether [entsprechend 9,5 Mol%] gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 8,0 g einer Monomermischung wurde ein zweites und drittes Mal wiederholt.

*[Polymerisationsstufe]*

Nach Abkühlen auf 100°C wurden weitere 136,0 g der Monomermischung (16,7 Gew.% Allylglycidylether, entsprechend 9,5 Mol%) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion durch Kühlung des Reaktors mit Eiswasser gestoppt.

*Produkteigenschaften:*

Das resultierende Gemisch war frei von den eingesetzten Monomeren Propylenoxid und Allylglycidylether.

| | | |
|---|---|---|
| Selektivität | c/a | 0,07 |
| | a/b | 0,19 |
| $B_{Carbonat}$ in % | | 14,9 |
| $B_{Doppelbindung}$ in % | | 5,5 |
| Molekulargewicht in g/mol | $M_n$ | 4678 |
| Polydispersität | | 1,4 |
| OH-Zahl in $mg_{KOH}/g$ | | 36,3 |

Beispiel 4: Herstellung von DOPO-haltigem Polyethercarbonatpolyol

Das Polyethercarbonatpolyol B (10,0 g) und DOPO (2,2 g) wurden gemischt und auf 120 °C erhitzt. Nach vollständigem Auflösen des DOPO wurde die Temperatur auf 80 °C geregelt. Anschließend wurde der Photoinitiator Irgacure 819 (100 mg) in die Reaktionsmischung gegeben. Die Lösung wurde für 2 min mit UV-Licht bestrahlt (22 $W/cm^2$). Das hergestellte Produkt wurde mittels NMR-Spektroskopie und GPC analysiert.

*Produkteigenschaften:*

| | | |
|---|---|---|
| $B_{DOPO}$ in % | | 3,72 (1,53 wt % P) |
| Molekulargewicht in g/mol | $M_n$ | 5288 |
| Polydispersität | | 2,3 |
| OH-Zahl in $mg_{KOH}/g$ | | 30,3 |

Herstellung der Polyurethane

Beispiel 5: Herstellung eines Polyurethans aus Phosphorhaltigem Polyethercarbonatpolyol

Für die Herstellung von Phosphorhaltigem Polyurethan (PU-3) wurde das DOPO-haltige Polyethercarbonatpolyol aus Beispiel 4 (9,3 g) mit einer äquimolaren Menge aliphatischen Polyisocyanates (HDI-Trimerisat, Desmodur N3300, 1,0 g) und 1000 ppm Dibutylzinnlaurat versetzt. Die Probe wurde auf einer planaren Metallplatte ausgehärtet. Anschließend wurde die Phosphorhaltigen Polyurethan-Probe (1,5 g, 20 x 15 x 2 mm) für 10 s einer Flamme ausgesetzt, um die Flammfestigkeit zu überprüfen

Beispiel 6 (Vgl.): Herstellung eines Polyurethans aus Polyethercarbonatpolyol

Für die Herstellung von Polyurethan ohne Phosphor (PU-4) wurden das Polyethercarbonatpolyol B (7,7 g) mit einer äquimolaren Menge aliphatischen Polyisocyanates (HDI-Trimerisat, Desmodur N3300, 1,0 g) und 1000 ppm Dibutylzinnlaurat versetzt. Die Probe wurde auf einer planaren Metallplatte ausgehärtet. Anschließend wurde die Polyurethan-Probe (1,5 g, 20 x 15 x 2 mm) für 10 s einer Flamme ausgesetzt, um die Flammfestigkeit zu überprüfen.

Ergebnisse des Flammtests

Die Ergebnisse aus dem Flammtest sind für die Polyurethan-Probe aus Beispiel 5 und die Polyurethan-Probe aus Vergleichsbeispiel 6 in der nachfolgenden Tabelle gegeben. Der angegebene Phosphorgehalt bezieht sich auf die Polyurethan-Probe.

| Beispiel | Phosphorgehalt (wt%) | Aussehen der Probe während der Beflammungsdauer von 10s | Aussehen der Probe 1 s nach Beflammung | Aussehen der Probe 30 s nach Beflammung | Flammfestigkeit |
|---|---|---|---|---|---|
| 7 | 1,4 | Die Flammenhöhe beträgt 26 mm | Keine Flamme sichtbar | Keine Flamme sichtbar | Flammhemmend |
| | | Die Probe ist oberflächlich geschmolzen | Die Probe ist oberflächlich geschmolzen | Die Probe ist oberflächlich geschmolzen | |
| 6 (Vgl.) | -- | Die Flammenhöhe beträgt 30 mm | Die Probe brennt selbstständig mit einer Flammenhöhe von 35 mm weiter | Keine Flamme sichtbar | Entflammbar |
| | | Es bilden sich brennende Tropfen | Es bilden sich brennende Tropfen | Die Probe ist sichtlich geschmolzen | |
| Vgl. Vergleichsbeispiel | | | | | |

Vergleich

Der Vergleich der Resultate aus Beispiel 5 mit dem Vergleichsbeispiel 6 zeigt, dass die phosphorhaltige Polyurethan-Probe eine weitaus höhere Flammfestigkeit besitzt.

## Patentansprüche

1. Verfahren zur Herstellung eines phosphorfunktionellen Polyethercarbonatpolyols, bei dem ein Polyethercarbonatpolyol mit ungesättigten Gruppen mit einer phosphorfunktionellen Verbindung gemäß Formel (Ia) zur Reaktion gebracht wird,

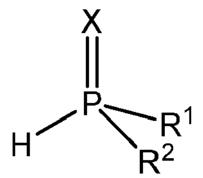

(Ia),

wobei

X = O, S bedeutet;
$R^1$ und $R^2$ ausgewählt sind aus der Gruppe umfassend C1-C22 Alkyl, C1-C22 Alkoxy, C1-C22 Alkylsulfanyl C6-C70 Aryl, C6-C70 Aryloxy, C6-C70 Arylsulfanyl, C7-C70 Aralkyl, C7-C70 Aralkyloxy, C7-C70 Aralkylsulfanyl, C7-C70 Alkylaryl, C7-C70 Alkylaryloxy, C7-C70 Alkylarylsulfanyl, oder wobei
$R^1$ und $R^2$ direkt und/oder über Heteroatome miteinander verbrückt sind und ausgewählt sind aus der Gruppe umfassend C1-C22 Alkylen, Sauerstoff, Schwefel oder $NR^5$, wobei $R^5$ Wasserstoff, C1-C22-Alkyl, C1-C22 Acyl, C7-C22 Aralkyl oder C6-C70-Arylrest sind.

2. Verfahren nach Anspruch 1, **dadurch gekennzeichnet, dass** die phosphorfunktionelle Verbindung der Formel (Ia) eine Verbindung der Formel (Ib) ist

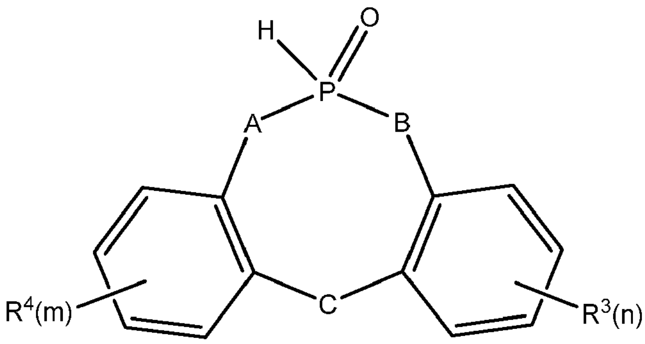

(Ib),

wobei

A, B, und C unabhängig voneinander ausgewählt sind aus der Gruppe umfassend eine chemische Bindung, O, NH, N-(C1-C10 Alkyl), N-(C6-C14 Aryl) und
$R^3$ und $R^4$ unabhängig voneinander ausgewählt sind aus der Gruppe umfassend C1-C10 Alkyl, C1-C10 Alkoxy, C6-C14 Aryl, C6-C14 Aryloxy, C9-C17 Aralkyl und
n, m unabhängig voneinander gleich 0, 1, 2, 3 oder 4 sind.

3. Verfahren nach Anspruch 2, **dadurch gekennzeichnet, dass** $R^3$ und $R^4$ ausgewählt sind aus der Gruppe umfassend C1-C8 Alkyl und C1-C8 Alkoxy und n, m unabhängig voneinander 0 oder 1 sind.

4. Verfahren nach einem der vorstehenden Ansprüche, **dadurch gekennzeichnet, dass** die phosphorfunktionelle Verbindung 9,10-Dihydro-9-oxa-10-phosphaphenanthren-10-oxid und/oder P-Methyl-Phosphinsäurebutylester ist.

5. Verfahren nach einem der vorstehenden Ansprüche, **dadurch gekennzeichnet, dass** das Polyethercarbonatpolyol mit ungesättigten Gruppen ausgewählt ist aus Polyetherpolyolen mit ungesättigten Gruppen, Polyethercarbonatpolyolen mit ungesättigten Gruppen, Polyetheresterpolyolen mit ungesättigten Gruppen oder Polyetherestercarbonatpolyolen mit ungesättigten Gruppen.

6. Verfahren nach einem der Ansprüche 1 bis 5, **dadurch gekennzeichnet, dass** das Polyethercarbonatpolyol mit ungesättigten Gruppen erhalten wurde durch Umsetzung einer Starterverbindung mit einem oder mehreren Alkylenoxiden, Kohlendioxid und einem oder mehrere weitere Monomere ausgewählt aus der Gruppe der Alkylenoxide, der cyclischen Anhydride von Dicarbonsäuren, der Lactone, Lactide, cyclischen 6-Ring Carbonate unter der Maßgabe, das zumindest eines der eingesetzten weiteren Monomere eine oder mehrere C-C-Doppel- oder Dreifachbindungen enthält

7. Verfahren nach einem der vorstehenden Ansprüche, **dadurch gekennzeichnet, dass** der Phosphorgehalt der phosphorfunktionellen Polyethercarbonatpolyole zwischen 0,5 und 15 Gew.-% beträgt.

8. Verfahren nach einem der vorstehenden Ansprüche, **dadurch gekennzeichnet, dass** das Polyethercarbonatpolyol mit ungesättigten Gruppen nach einem Verfahren hergestellt ist, das die folgenden Schritte umfasst:

(α) Vorlegen einer H-funktionellen Starterverbindung und eines DMC-Katalysators,
(β) gegebenenfalls Zudosieren eines Epoxids,
(γ) Zudosieren

(γ1) mindestens eines Epoxids, sowie
(γ2) mindestens eines Epoxids, eines cyclischen Anhydrids einer Dicarbonsäure, eines Lactons, eines Lactids und/oder eines cyclischen 6-Ring Carbonates, das eine Doppelbindung aufweist, und/
(γ3) von Kohlendioxid.

9. Verfahren nach einem der vorstehenden Ansprüche, **dadurch gekennzeichnet, dass** die Umsetzung des Polyethercarbonatpolyols mit ungesättigten Gruppen mit der phosphorfunktionellen Verbindung gemäß Formel (Ia) bei einer Temperatur größer oder gleich 100 °C und kleiner oder gleich 220 °C erfolgt.

**10.** Verfahren nach einem der Ansprüche 1 bis 8, **dadurch gekennzeichnet, dass** die Umsetzung des Polyethercarbonatpolyols mit ungesättigten Gruppen mit der phosphorfunktionellen Verbindung gemäß Formel (Ia) bei einer Temperatur größer oder gleich 0 °C und kleiner oder gleich 100 °C erfolgt und bei der Umsetzung
eine Verbindung ausgewählt aus der Gruppe der basischen Katalysatoren oder
eine Verbindung ausgewählt aus der Gruppe der Photoinitiatoren, Peroxide, Azoverbindungen, metallaktivierten Peroxide und/oder Redoxinitiatoren
hinzugegeben wird.

**11.** Phosphorfunktionelles Polyethercarbonatpolyol erhältlich nach einem Verfahren gemäß einem der Ansprüche 1 bis 10.

**12.** Verfahren zur Herstellung eines phosphorfunktionellen Polyurethan-Polymers, **dadurch gekennzeichnet, dass** wenigstens ein phosphorfunktionelles Polyethercarbonatpolyol gemäß Anspruch 11 mit einem oder mehreren Di- oder Polyisocyanaten umgesetzt wird.

**13.** Phosphorfunktionelles Polyurethan-Polymer erhältlich nach einem Verfahren gemäß Anspruch 12.

**14.** Verwendung eines phosphorfunktionellen Polyethercarbonatpolyols nach Anspruch 11 oder eines phosphorfunktionellen Polyurethan-Polymers nach Anspruch 13 als flammhemmender Haftvermittler, Füllstoffaktivator oder als Flammschutzmittel oder als flammhemmende Beschichtung, Schaum, Dichtmasse, thermoplastischer Kunststoff, duromerer Kunststoff oder Kautschuk.

**15.** Formkörper aufweisend eine flammhemmende Schicht umfassend ein phosphorfunktionelles Polyurethan-Polymer nach Anspruch 13.

Europäisches Patentamt
European Patent Office
Office européen des brevets

# EUROPÄISCHER RECHERCHENBERICHT

Nummer der Anmeldung
EP 17 16 5056

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 2 395 039 A1 (BASF SE [DE]) 14. Dezember 2011 (2011-12-14) * Absätze [0098] - [0102] * ----- | 1-15 | INV. C08G18/50 C08G18/79 C08G64/34 C08G18/24 C08G18/44 C08G18/46 |
| | | | RECHERCHIERTE SACHGEBIETE (IPC) |
| | | | C08G |

Der vorliegende Recherchenbericht wurde für alle Patentansprüche erstellt

1

| Recherchenort | Abschlußdatum der Recherche | Prüfer |
|---|---|---|
| München | 21. August 2017 | Bergmeier, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 17 16 5056

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-08-2017

| Im Recherchenbericht angeführtes Patentdokument | Datum der Veröffentlichung | Mitglied(er) der Patentfamilie | Datum der Veröffentlichung |
|---|---|---|---|
| EP 2395039 A1 | 14-12-2011 | BR 112012029455 A2 | 07-03-2017 |
| | | CA 2799344 A1 | 24-11-2011 |
| | | CN 102939317 A | 20-02-2013 |
| | | EP 2395039 A1 | 14-12-2011 |
| | | EP 2571921 A1 | 27-03-2013 |
| | | ES 2462169 T3 | 22-05-2014 |
| | | JP 5642265 B2 | 17-12-2014 |
| | | JP 2013526650 A | 24-06-2013 |
| | | KR 20130040928 A | 24-04-2013 |
| | | WO 2011144726 A1 | 24-11-2011 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20130046036 A1
- US 20080227884 A
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A


### In der Beschreibung aufgeführte Nicht-Patentliteratur


- **INOUE et al.** Copolymerization of Carbon Dioxide and Alkylenoxide with Organometallic Compounds. *Die Makromolekulare Chemie,* 1969, vol. 130, 210-220
- **T. MYERS ; N. KIRK-OTHMER.** Encyclopedia of Chemical Technology. 2005, vol. 14, 274-311
- **J. C.BEVINGTON.** *Makromolekulare Chemie, Macromolecular Symposia,* 1987, vol. 10 (1), 89
- **J.P. FOUASSIER ; X. ALLONAS ; J. LALEVEE ; C. DIETLIN.** *Photochemistry and Photophysics of Polymer Materials,* 2010, 351-419
- **C. SMA.** *Angewandte Makromolekulare Chemie,* 1969, vol. 9, 165-181
- **G. S. MISRA.** *U. D. N. Bajpai Progress in Polymer Science,* 1982, vol. 8 (1-2), 61-131
- *Progress in Polymer Science,* 2009, vol. 34, 1068-1133